(19) Europäisches Patentamt
European Patent Office
Office européen des brevets

(11) EP 4 610 283 A1

(12) EUROPEAN PATENT APPLICATION
published in accordance with Art. 153(4) EPC

(43) Date of publication:
03.09.2025 Bulletin 2025/36

(21) Application number: 23881917.1

(22) Date of filing: 26.10.2023

(51) International Patent Classification (IPC):
*C08F 210/16* (2006.01) *C08F 4/6592* (2006.01)
*C08F 4/64* (2006.01) *C08F 4/642* (2006.01)
*C08F 297/08* (2006.01)

(52) Cooperative Patent Classification (CPC):
C08F 4/64; C08F 4/642; C08F 4/6592;
C08F 210/16; C08F 297/08

(86) International application number:
PCT/CN2023/126788

(87) International publication number:
WO 2024/088341 (02.05.2024 Gazette 2024/18)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.10.2022 CN 202211330070

(71) Applicants:
- China Petroleum & Chemical Corporation
  Beijing 100728 (CN)
- Sinopec (Beijing) Research Institute of Chemical Industry Co., Ltd.
  Beijing 100013 (CN)

(72) Inventors:
- HAN, Shuliang
  Beijing 100013 (CN)
- SONG, Wenbo
  Beijing 100013 (CN)
- LUO, Chunxia
  Beijing 100013 (CN)
- FANG, Yuanyuan
  Beijing 100013 (CN)
- LI, Juan
  Beijing 100013 (CN)
- JIN, Zhao
  Beijing 100013 (CN)
- ZHENG, Junpeng
  Beijing 100013 (CN)
- WANG, Lusheng
  Beijing 100013 (CN)

(74) Representative: Hoffmann Eitle
Patent- und Rechtsanwälte PartmbB
Arabellastraße 30
81925 München (DE)

# (54) ETHYLENE/ALPHA OLEFIN COPOLYMER AND PREPARATION METHOD THEREFOR

(57) The invention relates to an ethylene/α-olefin copolymer and a preparation method thereof. The ethylene/α-olefin copolymer has an α-olefin content of greater than or equal to 30 wt%, a density of less than 0.875 g/cm$^3$, a melting point of greater than or equal to 90 °C, and the α-olefin is a $C_3$-$C_{20}$ α-olefin. The ethylene-α-olefin copolymer of the present invention has a higher use temperature range at the same comonomer content as compared to conventional polyolefin elastomers, and is suitable for use in an environment with a higher temperature.

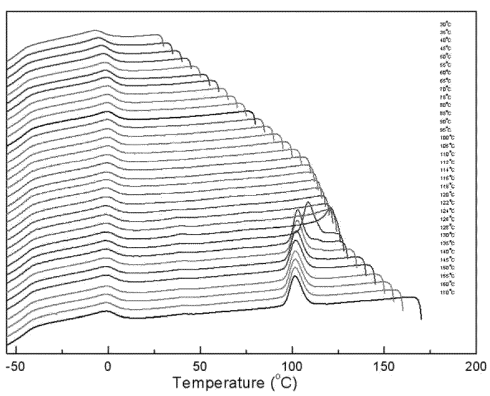


Fig.1

EP 4 610 283 A1

## Description

### Technical Field

The invention relates to the field of olefin coordination polymerization, in particular to an ethylene/α-olefin copolymer, a preparation method of ethylene/α-olefin copolymer and an ethylene/α-olefin copolymer prepared by the method.

### Backgrounds

Polyolefin elastomers (POEs) are elastomers obtained by polymerizing ethylene with an α-olefin in the presence of a homogeneous metal catalyst. The polyolefin elastomer in the narrow sense means a copolymer of ethylene with an α-olefin (1-butene, 1-hexene or 1-octene), wherein α-olefin mass fraction is higher than 20%. POE has a wide range of uses, and can be used as rubber, as a thermoplastic elastomer, as well as can be used as impact modifier and toughening agent for plastics. POE has been used in toughening and modification of a variety of plastics and has become a strong competitor to traditional toughening agents.

POE is synthesized by Dupont Dow Elastomers company, USA using the high temperature solution method Insite process. The catalyst used in the process is a CGC catalyst. Exxon produces POE by using Exxpol polymerization process, mainly using metallocene catalysts.

CN102464751B discloses a method for copolymerizing ethylene and α-olefin, which is carried out by copolymerizing ethylene and α-olefin under the action of metallocene catalyst and alkyl aluminoxane to obtain copolymer, wherein the molar content of branched chain unit of the copolymer is 2-18 mol%, and the weight average molecular weight is $1\times10^4$-$1\times10^6$; the molecular weight distribution $M_w/M_n$ is 1-3, the melt index is 0.001-25 g/10min, the melting point is 115-135°C, and the content of the comonomer is less than 30wt%.

CN108752526A discloses a catalyst system for preparing copolymer of ethylene and/or α-olefin and cyclic olefin, specifically a toluene solution of metallocene compound, organic boron compound and alkyl aluminum.

The polyolefin elastomers prepared with the existing single catalyst systems have a lower melting point, e.g. lower than 90 °C, at comonomer content above 30 wt%. The lower melting point limits the use temperature range of this type of materials, which affects the use of the materials in the environment with a higher temperature.

### Disclosures of Invention

In view of the problem of having lower melting point for polyolefin elastomer product in the prior art when the content of comonomer is higher, the invention provides an ethylene-α-olefin copolymer and a preparation method thereof. The ethylene-α-olefin copolymer of the present invention has a relatively high melting point.

A first aspect of the invention provides an ethylene/α-olefin copolymer wherein the ethylene/α-olefin copolymer has an α-olefin content greater than or equal to 30 wt%, a density less than 0.875 g/cm$^3$, a melting point greater than or equal to 90 °C, and the α-olefin is a $C_3$-$C_{20}$ α-olefin.

A second aspect of the present invention provides a method of preparing an ethylene/α-olefin copolymer, the method comprising: carrying out copolymerization reaction of ethylene and an α-olefin in solution in the presence of at least one catalyst in at least one reactor to obtain the ethylene/α-olefin copolymer;

wherein, in the whole reaction process, the molar concentration ratio of ethylene to the α-olefin in the solution in the reactor is maintained between 0.6 and 2.2;
the catalyst comprises:

A. a catalyst component;
B. an organoboron compound; and
C. an organoaluminum compound;

the catalyst component is a premixture of a half-sandwich metallocene catalyst precursor and an alkyl aluminum compound;
the half-sandwich metallocene catalyst precursor comprises a compound having the general formula $Cp'LMQ_2$, wherein,
Cp' is an optionally substituted cyclopentadiene group or a group derived therefrom, preferably one or more selected from the group consisting of substituted or unsubstituted cyclopentadienyl, substituted or unsubstituted indenyl and substituted or unsubstituted fluorenyl; when Cp' comprises a substituent, the substituent is one or more selected from the group consisting of $C_1$-$C_{12}$ alkyl, $C_1$-$C_{12}$ alkoxy, $C_1$-$C_{12}$ silyl, $C_6$-$C_{12}$ aryl, $C_7$-$C_{12}$ aralkyloxy, $C_2$-$C_{12}$ alkynyl and

$C_8$-$C_{12}$ arylalkynyl, preferably one or more selected from the group consisting of $C_1$-$C_8$ alkyl, more preferably one or more selected from $C_1$-$C_6$ alkyl, and further preferably one or more selected from methyl, ethyl, n-propyl, isopropyl, n-butyl and isobutyl;

L is one or more of optionally substituted phenol ligands and phosphanimine ligands;

M is an element selected from group IVB, preferably Zr and/or Ti, more preferably Ti;

each Q is independently selected from halogen and/or $C_1$-$C_6$ alkyl, preferably halogen and/or $C_1$-$C_3$ alkyl, more preferably chlorine and/or methyl.

A third aspect of the present invention provides an ethylene/α-olefin copolymer prepared by the above method.

Compared with the prior art, the invention has the following characteristics:
the present invention uses a homogeneous metal catalyst precursor blend together with the organoaluminum compound and the organoboron compound, and at the same time controls the proportion of ethylene and comonomer(s) in the system, thereby preparing the ethylene copolymer with high activity while catalyzing the copolymerization of ethylene and α-olefin, wherein the copolymerization activity of ethylene and α-olefin reaches more than $10^7$ $g \cdot mol^{-1}(metal) \cdot h^{-1}$, and the melting point of the obtained copolymer can be higher than 90 °C under the conditions that the content of α-olefin is higher than 30 wt% and the density is less than 0.875 $g/cm^3$. The ethylene-α-olefin copolymer of the present invention has a higher use temperature at the same comonomer content as compared to conventional polyolefin elastomers, and is suitable for use in an environment with a higher temperature.

Other features and advantages of the invention will be set forth in detail in the section of Detailed Description which follows.

Brief Description of Drawings

Exemplary embodiments of the present invention will be described in more detail by referring to the accompanying drawings.

FIG. 1 is a graph of the crystallization curves of the copolymer prepared in Example 1 at different initial cooling temperatures $T_1$.

FIG. 2 is a graph of the crystallization curves of the copolymer prepared in Example 5 at different initial cooling temperatures $T_1$.

FIG. 3 is a graph of the crystallization curves of the copolymer prepared in Example 6 at different initial cooling temperature $T_1$.

FIGS. 4a and 4b show the results of low field nuclear magnetic resonance relaxation experiments for copolymer of the present invention and comparative copolymers;

FIGS. 5a-5c show the results of low field nuclear magnetic resonance relaxation experiments for prior art copolymers;

FIGS. 6a-6c show the results of low field nuclear magnetic resonance relaxation experiments for copolymers of comparative patent sample, Comparative example 3, and Comparative example 1;

FIGS. 7a-7h show DSC curves of fractions obtained after CEF fractionation of copolymers of the invention;

FIGS. 8a-8b show the results of CEF-IR characterization of third temperature fraction (high melting point fraction) obtained after substantially removal of soluble fraction by soaking in xylene at room temperature for 7 days and then soaking in xylene at 85 °C for 2 days of the >80 °C fraction obtained after CEF fractionation of a copolymer of the invention.

FIG. 9 shows the Crystallization Elution Fractionation (CEF) elution curves.

Detailed Description

The following describes the embodiments of the present invention in detail. It should be understood that the embodiments described herein are only used to illustrate and explain the present invention and are not used to limit the present invention.

The invention provides an ethylene/α-olefin copolymer, which has an α-olefin content of greater than or equal to 30 wt%, a density of less than 0.875 $g/cm^3$, a melting point of greater than or equal to 90 °C, and the α-olefin is a $C_3$-$C_{20}$ α-olefin.

According to the present invention, in some embodiments, the ethylene/α-olefin copolymer has the following characteristics: the α-olefin content is 30-55 wt%, the density is 0.850-0.875 $g/cm^3$, the melting point is 90-130 °C, the crystallinity is 0.05-15%, preferably 0.1-10%, and the melt flow rate under 2.16 kg load at 190 °C is >0.1 g/10min, preferably is 0.2 g/10 min-400 g/10 min.

According to the invention, the ethylene/α-olefin copolymer has a density of 0.850~0.875 $g/cm^3$, for example which can be 0.850 $g/cm^3$, 0.851 $g/cm^3$, 0.852 $g/cm^3$, 0.853 $g/cm^3$, 0.854 $g/cm^3$, 0.855 $g/cm^3$, 0.856 $g/cm^3$, 0.857 $g/cm^3$,

0.858 g/cm$^3$, 0.859 g/cm$^3$, 0.860 g/cm$^3$, 0.861 g/cm$^3$, 0.862 g/cm$^3$, 0.863 g/cm$^3$, 0.864 g/cm$^3$, 0.865 g/cm$^3$, 0.866 g/cm$^3$, 0.867 g/cm$^3$, 0.868 g/cm$^3$, 0.869 g/cm$^3$, 0.870 g/cm$^3$, 0.871 g/cm$^3$, 0.872 g/cm$^3$, 0.873 g/cm$^3$, 0.874 g/cm$^3$, 0.875 g/cm$^3$, or a range formed by any two of above values.

According to the present invention, the ethylene/$\alpha$-olefin copolymer has a crystallinity of between 0.05% and 15%, preferably between 0.1% and 10%, and for example which can be 0.1%, 0.2%, 0.3%, 0.4%, 0.5%, 0.6%, 0.7%, 0.8%, 0.9%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5%, 15.0%, or a range formed by any two of above values.

In some embodiments, the ethylene/$\alpha$-olefin copolymer of the present invention has the following characteristics when tested using a Differential Scanning Calorimeter (DSC):

when tested by a differential scanning calorimeter, the ethylene/$\alpha$-olefin copolymer has a melting endothermic peak between 90 °C and 130 °C; and/or

when tested by a differential scanning calorimeter, the copolymer is heated to 180 °C at the speed of 10 °C/min, and the peak temperature of the generated melting peak is recorded as $T_m$; after being stabilized for 10 minutes, the copolymer is cooled to - 50 °C at the speed of 10 °C/min and then the copolymer is heated to $T_1$ at the speed of 10 °C/min; after being stabilized for 10 minutes, the copolymer is cooled to - 50 °C at the speed of 10 °C/min, a crystallization exothermic peak is generated and the peak temperature is recorded as $T_2$; $T_1$, $T_m$ and $T_2$ satisfy:

i) when $T_m < T_1 \leq T_m$+20 °C, $T_2$ increases along with the decreasing of $T_1$;
ii) when $T_1 > T_m$+20 °C, $T_2$ does not change with the decreasing of $T_1$.

The ethylene/$\alpha$-olefin copolymer of the present invention has the characteristics of high melting point and high comonomer content, and is favorable for ensuring a wider application temperature range while maintaining high elasticity. The ethylene/$\alpha$-olefin copolymer of the present invention has a melting point of from 90 to 130 °C. In some embodiments, the melting point of the ethylene/$\alpha$-olefin copolymer of the present invention can be 90 °C, 95 °C, 100 °C, 105 °C, 110 °C, 115 °C, 120 °C, 125 °C, or 130 °C, or a range formed by any two of above values. In some embodiments, preferably, the ethylene/$\alpha$-olefin copolymer of the present invention has a melting point of 95-130 °C, more preferably 100-130 °C, more preferably 105-130 °C, such as 110-130 °C, or 120-130 °C. The melting point of the ethylene/$\alpha$-olefin copolymer of the present invention can be measured, for example, using the DSC method; for example, as described below.

According to the present invention, preferably, the $\alpha$-olefin is a $C_3$-$C_{10}$ $\alpha$-olefin, including but not limited to one or more of propylene, 1-butene, 1-hexene, 1-octene and 1-decene, preferably one or more of 1-hexene, 1-octene and 1-decene.

According to the present invention, the ethylene/$\alpha$-olefin copolymer has an $\alpha$-olefin content of 30 wt% to 55 wt%. For example, the ethylene/$\alpha$-olefin copolymer of the present invention can have an $\alpha$-olefin content of 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, or a range formed by any two of above values.

In the present invention, the content of the $\alpha$-olefin in the copolymer can be measured by a Nuclear Magnetic Resonance (NMR) spectroscopy method such as a high temperature nuclear magnetic resonance carbon spectroscopy method; for example, as described below. The use of Nuclear Magnetic Resonance (NMR) spectroscopy method to measure comonomer content is known in the art.

According to the present invention, the ethylene/$\alpha$-olefin copolymer has at least 2 peaks on the elution curve obtained by a Crystallization Elution Fractionation (CEF) method. In some embodiments, the ethylene/$\alpha$-olefin copolymer of the present invention has 2 peaks, 3 peaks, 4 peaks, or 5 peaks on the elution curve obtained by a Crystallization Elution Fractionation (CEF) test method.

In some embodiments, a first temperature fraction, a second temperature fraction and a third temperature fraction are obtained by Crystallization Elution Fractionation (CEF) of the ethylene/$\alpha$-olefin copolymer of present invention, wherein the first temperature fraction being < 40 °C fraction, the second temperature fraction being 40-80 °C fraction, and the third temperature fraction being > 80 °C fraction; wherein the content of the first temperature fraction is from 80 to 98 wt%, the content of the second temperature fraction is from 1 to 10 wt%, and the content of the third temperature fraction is from 1 to 10 wt%, based on the weight of the ethylene/$\alpha$-olefin copolymer.

In some embodiments, when obtained by Crystallization Elution Fractionation (CEF) of the ethylene/$\alpha$-olefin copolymer of the present invention, the content of the first temperature fraction is from 84 to 95.5wt%, the content of the second temperature fraction is from 1.5 to 8wt%, and the content of the third temperature fraction is from 3 to 8wt%, based on the weight of the ethylene/$\alpha$-olefin copolymer; preferably, the content of the first temperature fraction is from 85 to 94.5 wt%, the content of the second temperature fraction is from 2 to 7.5 wt%, and the content of the third temperature fraction is from 3.5 to 7.5 wt%, based on the weight of the ethylene/$\alpha$-olefin copolymer.

In the present invention, in some embodiments, the first temperature fraction has at least two peaks on its DSC curve, such as 2 peaks or 3 peaks, the second temperature fraction has at least three peaks on its DSC curve, such as 3 peaks, 4 peaks or 5 peaks, and the third temperature fraction has at least two peaks on its DSC curve, such as 2 peaks or 3 peaks. In some embodiments, for the at least two peaks on the DSC curve of the first temperature fraction, the peak with the lowest melting point corresponds to a melting point lower than 45 °C and the peak with the highest melting point corresponds to a melting point higher than 80 °C; for the at least three peaks on the DSC curve of the second temperature fraction, the peak with the lowest melting point corresponds to a melting point lower than 40 °C, the at least one peak with intermediate melting point(s) corresponds to a melting point between 40 °C and 80 °C, and the peak with the highest melting point corresponds to a melting point higher than 80 °C; for the at least two peaks on the DSC curve of the third temperature fraction, the peak with the lowest melting point corresponds to a melting point lower than 40 °C and the peak with the highest melting point corresponds to a melting point higher than 80 °C.

In some embodiments, the third temperature fraction (i.e., > 80 °C fraction) of the ethylene/α-olefin copolymer obtained by the Crystallization Elution Fractionation (CEF) test method is soaked in xylene at room temperature for 7 days and then soaked in xylene at 85 °C for 2 days so as to obtain a third temperature fraction (high melting point fraction) from which the soluble fraction is (substantially) removed. Wherein, when weighed after drying in a vacuum oven at 80 degrees Celsius for 8 hours, the third temperature fraction (high melting point fraction) comprises 2 to 8wt% of the total weight of the ethylene/α-olefin copolymer.

In the present application, room temperature means about 25 °C.

According to the present invention, the ethylene/α-olefin copolymer of the present invention comprises a block copolymer of ethylene and α-olefin and a random copolymer of ethylene and α-olefin, wherein the random copolymer of ethylene and α-olefin comprises an ethylene random copolymerization elastomer and a linear low density polyethylene. The random copolymer of ethylene and α-olefin is the main component; preferably, the content of the random copolymer of ethylene and α-olefin is 89 to 98% by weight and the content of the block copolymer of ethylene and α-olefin is 2 to 11% by weight, based on the weight of the ethylene/α-olefin copolymer (100% by weight). In some embodiments, the content of the block copolymer of ethylene and α-olefin can be 2 to 10 weight percent, 2 to 9 weight percent, or 2 to 8 weight percent. In the present invention, the block copolymer of ethylene and α-olefin comprises blocks having ethylene as main component and blocks having α-olefin as main component. In the present invention, the linear low density polyethylene is the third temperature fraction (high melting point fraction) from which the soluble fraction is (substantially) removed, wherein the third temperature fraction (high melting point fraction) is obtained by soaking the third temperature fraction (i.e., > 80 °C fraction) of the ethylene/ α -olefin copolymer obtained by the Crystallization Elution Fractionation (CEF) separation in xylene at room temperature for 7 days and then soaking in xylene at 85 °C for 2 days.

In the present invention, the content of the block copolymer of ethylene and α-olefin is calculated by using the proportions of the sequence structures by the following formula: $W_{block\ copolymer}=336\times n_{OOO}/[336\times n_{OOO}+84\times n_{EEE}+168\times(n_{EEO}+n_{EOE})+252\times(n_{OEO}+n_{OOE})]$ wherein $n_{OOO}$, $n_{EEE}$, $n_{EEO}$, $n_{EOE}$, $n_{OEO}$ and $n_{OOE}$ are the molar percentage contents of OOO, EEE, EEO, EOE, OEO, OOE sequence structures in the ethylene/α-olefin copolymer, respectively, wherein the total of the OOO, EEE, EEO, EOE, OEO, OOE sequence structures is 100%, wherein E represents ethylene structural unit, and O represents α-olefin structural unit. In the present invention, the above sequence structures are determined by using high temperature nuclear magnetic resonance carbon spectroscopy method.

According to the invention, the third temperature fraction (i.e. > 80 °C fraction) of the ethylene/α-olefin copolymer obtained by the Crystallization Elution Fractionation (CEF) method is soaked in xylene at room temperature for 7 days, followed by soaked in xylene at 85 °C for 2 days to obtain the third temperature fraction (high melting point fraction) from which the soluble fraction is (substantially) removed. The third temperature fraction (high melting point fraction) with soluble fraction (substantially) removed is detected for comonomer content (i.e. the amount of $-CH_3$ contained in 1000 carbon atoms in the molecular chain) by an infrared detector during Crystallization Elution Fractionation (CEF) process. According to the invention, the comonomer content of the third temperature fraction (high melting point fraction) from which the soluble fraction (substantially) is removed can be from 5 to 25 wt%, preferably from 5.5 to 22 wt%, more preferably from 6 to 20 wt%.

In the ethylene/α-olefin copolymer of the present invention, the molar percentage content of OOO sequence structure is from 0.7% to 3.5%, preferably 0.8% to 3.2%, preferably 0.85% to 3.0%, more preferably 0.9% to 2.8%; wherein the total of EEE, EEO, OEO, EOE, OOE and OOO sequence structures in the ethylene/α-olefin copolymer is 100%, wherein E represents ethylene structural unit and O represents α-olefin structural unit. In the present invention, the above sequence structures are determined by using high temperature nuclear magnetic resonance carbon spectroscopy method.

The present invention further provides a method for preparing an ethylene/α-olefin copolymer, the method comprising: carrying out copolymerization reaction of ethylene and an α-olefin in solution in the presence of at least one catalyst in at least one reactor to obtain the ethylene/α-olefin copolymer; wherein, in the whole reaction process, the molar concentration ratio of ethylene to the α-olefin in the solution in the reactor is maintained between 0.6 and 2.2;

the catalyst comprises:

A. a catalyst component;
B. an organoboron compound; and
C. an organoaluminum compound;

the catalyst component is a premixture of a half-sandwich metallocene catalyst precursor and an alkyl aluminum compound;

the half-sandwich metallocene catalyst precursor comprises a compound having the general formula $Cp'LMQ_2$, wherein,

Cp' is an optionally substituted cyclopentadiene group or a group derived therefrom, preferably one or more selected from the group consisting of substituted or unsubstituted cyclopentadienyl, substituted or unsubstituted indenyl and substituted or unsubstituted fluorenyl; when Cp' is a substituted group (i.e. a group substituted by a substituent), the substituent is one or more selected from the group consisting of $C_1$-$C_{12}$ alkyl, $C_1$-$C_{12}$ alkoxy, $C_1$-$C_{12}$ silyl, $C_6$-$C_{12}$ aryl, $C_7$-$C_{12}$ aralkyloxy, $C_2$-$C_{12}$ alkynyl and $C_8$-$C_{12}$ arylalkynyl, preferably one or more selected from the group consisting of $C_1$-$C_8$ alkyl, more preferably one or more selected from $C_1$-$C_6$ alkyl, and further preferably one or more selected from methyl, ethyl, n-propyl, isopropyl, n-butyl and isobutyl;

L is one or more of optionally substituted phenol ligands and phosphanimine ligands;

M is an element selected from group IVB, preferably Zr and/or Ti, more preferably Ti;

each Q is independently selected from halogen and/or $C_1$-$C_6$ alkyl, preferably halogen and/or $C_1$-$C_3$ alkyl, more preferably chlorine and/or methyl.

According to the invention, preferably, the molar concentration ratio of ethylene to α-olefin in solution in reactor is maintained between 0.65 and 1.6, preferably between 0.8 and 1.4. For example, the molar concentration ratio of ethylene to α-olefin can be maintained at 0.7, 0.8, 0.9, 1.0, 1.1, 1.2, 1.3, 1.4, and any value between any two of above values, or within a range formed by any two of above values.

According to the present invention, the catalyst component of the present invention can be formed by contacting in advance an alkyl aluminum compound with the half-sandwich metallocene catalyst precursor, which has advantages of increasing polymerization activity and improving copolymerization effect when polymerization is carried out. According to the present invention, an ethylene/α-olefin copolymer having a high melting point and a high comonomer content can be produced in high productivity by controlling the ethylene to α-olefin concentration ratio.

One of the key points of the present invention is the control of the ethylene to α-olefin concentration ratio and thus there is no particular requirements for the respective concentration range of ethylene and α-olefin in solution. According to the invention, the molar concentration of ethylene in the solution in the reactor can be from 0.05 to 10 mol/L, preferably from 0.3 to 4 mol/L; and/or the molar concentration of α-olefin can be from 0.031 to 15.4 mol/L, preferably from 0.2 to 6.15 mol/L. For example, the molar concentration of ethylene in the solution in the reactor can be 0.05 mol/L, 0.10 mol/L, 0.15 mol/L, 0.20 mol/L, 0.25 mol/L, 0.30 mol/L, 0.35 mol/L, 0.40 mol/L, 0.45 mol/L, 0.50 mol/L, 0.55 mol/L, 0.60 mol/L, 0.65 mol/L, 0.70 mol/L, 0.75 mol/L, 0.80 mol/L, 0.85 mol/L, 0.90 mol/L, 0.95 mol/L, 1.0 mol/L, 1.5 mol/L, 2.0 mol/L, 2.5 mol/L, 3.0 mol/L, 3.5 mol/L, 4.0 mol/L, 4.5 mol/L, 5.0 mol/L, 5.5 mol/L, 6.0 mol/L, 6.5 mol/L, 7.0 mol/L, 7.5 mol/L, 8.0 mol/L, 8.5 mol/L, 9.0 mol/L, 9.5 mol/L, 10 mol/L, or a range formed by any two of above values. For example, the molar concentration of α-olefin in the solution in the reactor can be 0.031 mol/L, 0.05 mol/L, 0.06 mol/L, 0.07 mol/L, 0.08 mol/L, 0.09 mol/L, 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L, 6 mol/L, 6.5 mol/L, 7 mol/L, 7.5 mol/L, 8 mol/L, 8.5 mol/L, 9 mol/L, 9.5 mol/L, 10 mol/L, 10.5 mol/L, 11 mol/L, 11.5 mol/L, 12 mol/L, 12.5 mol/L, 13 mol/L, 13.5 mol/L, 14 mol/L, 14.5 mol/L, 15 mol/L, 15.4 mol/L, or a range formed by any two of above values.

In the prior art, the α-olefin is generally added in one portion, which makes it impossible to ensure that the molar concentration ratio of ethylene to α-olefin is always maintained within the range required by the present application. Without being bound by any theory, it is believed that this makes it impossible to obtain the ethylene/α-olefin copolymer of the present application.

Various means can be used to achieve control over the ethylene/α-olefin concentration ratio. In some embodiments, for example, ethylene is fed continuously and α-olefin is fed intermittently. The intermittent feeding means that the α-olefin is added in batches, and the number of batches is determined on the basis of the principle of ensuring the aforementioned concentration ratio. For example, according to some embodiments, the α-olefin can be added in 2, 3, 4, 5, or even more batches. In some embodiments, the α-olefin can be added in batches at equal interval of time, depending on the total polymerization time. For example, if the total polymerization time is 30 minutes and the α-olefin is added in three batches, then the first batch is added at 0-minute, the second batch is added at $10^{th}$-minute, and the third batch is added at $20^{th}$-minutes. In some embodiments, the time intervals between batches of α-olefin addition can be the same or different. In the present invention, if the α-olefin is added in batches, the amount of α-olefin added in the first batch can be generally

higher than in subsequent batches. In some embodiments, the amount of the α-olefin added in the first batch can comprise from 30% to 90% of the total amount of α-olefin added, for example, can be 30%, 40%, 50%, 60%, 70%, 80%, 90%, or a range formed by any two of above values.

The skilled person can suitably select the time intervals for α-olefin batchwise feeding to enable the desired ethylene to α-olefin molar concentration ratio to be achieved according to the application. In some embodiments, when the α-olefin is fed intermittently, the time interval can be from 1 to 30 minutes, for example, can be from 1 to 15 minutes. The time interval of the intermittent feeding refers to the time interval from the ending of last feeding to the starting of next feeding. The time interval can specifically be 1 minute, 2 minutes, 3 minutes, 4 minutes, 5 minutes, 6 minutes, 7 minutes, 8 minutes, 9 minutes, 10 minutes, 11 minutes, 12 minutes, 13 minutes, 14 minutes, 15 minutes, 16 minutes, 17 minutes, 18 minutes, 19 minutes, 20 minutes, and any value in between any two of above values.

In some embodiments, both ethylene and α-olefin are continuously fed to achieve the desired ethylene/α-olefin concentration ratio. The feeding rates of ethylene and α-olefin can be suitably selected by those skilled in the art to maintain the proceeding of polymerization and achieve the desired ethylene/α-olefin concentration ratio of the present invention.

In the present application, the concentration ratio of ethylene to α-olefin in the solution in the polymerization reactor at the time of sampling can be determined by: taking out a sample of the polymerization solution (which contains the polymer) from the polymerization reactor at different times and testing the solution sample to determine the amount (concentration) of the polymer in the solution sample and the comonomer content in the polymer, and determining the concentration ratio of ethylene to α-olefin in the solution in the polymerization reactor at the time of sampling according to the concentration of the polymer, the structure of the polymer and the monomer/comonomer feeding amounts. The sampling frequency can be reasonably determined by one skilled in the art as long as the requirement of the present application on the ethylene to α-olefin concentration ratio can be met.

The conditions for the copolymerization reaction of ethylene and α-olefin can be suitably selected by those skilled in the art, including, for example, the pressure in the reactor, the polymerization temperature, the polymerization time, and the like. For example, those skilled in the art can select polymerization conditions commonly known in the art for carrying out the copolymerization of ethylene and an α-olefin in solution for obtaining a polyolefin elastomer.

In some embodiments, the conditions for the copolymerization reaction of the present invention can include the following. The polymerization pressure can be 0.1 to 10 MPa, preferably 0.2 to 5 MPa; the polymerization temperature can be -30 °C to 160 °C, and preferably 10 °C to 120 °C; and the polymerization time can be 1 to 300 minutes, preferably 10 to 60 minutes. In some embodiments, the polymerization pressure can be 0.1 MPa, 0.2 MPa, 0.3 MPa, 0.4 MPa, 0.5 MPa, 0.6 MPa, 0.7 MPa, 0.8 MPa, 0.9 MPa, 1 MPa, 1.5 MPa, 2MPa, 2.5 MPa, 3 MPa, 3.5 MPa, 4 MPa, 4.5 MPa, 5MPa, 5.5 MPa, 6 MPa, 6.5 MPa, 7 MPa, 7.5 MPa, 8 MPa, 8.5 MPa, 9 MPa, 9.5 MPa, 10 MPa, or a range formed by any two of above values. The polymerization temperature can be -30 °C, -20 °C, -10 °C, 0 °C, 10 °C, 20 °C, 30 °C, 40 °C, 50 °C, 60 °C, 70 °C, 80 °C, 90 °C, 100 °C, 110 °C, 120 °C, 130 °C, 140 °C, 150 °C, 160 °C, or a range formed by any two of above values. The polymerization time can be 1 minute, 2 minutes, 3 minutes, 4 minutes, 5 minutes, 6 minutes, 7 minutes, 8 minutes, 9 minutes, 10 minutes, 20 minutes, 30 minutes, 40 minutes, 50 minutes, 60 minutes, 70 minutes, 80 minutes, 90 minutes, 100 minutes, 150 minutes, 200 minutes, 250 minutes, 300 minutes, or a range formed by any two of above values.

According to some embodiments of the invention, in the catalyst component of the invention, the half-sandwich metallocene catalyst precursor is at least one selected from compounds of formula I and compounds of formula II,

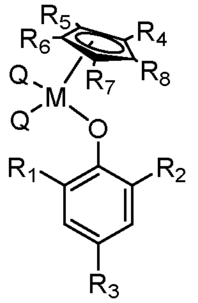

formula I

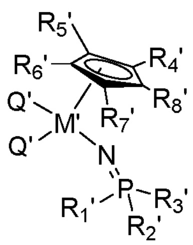

formula II

in the formula I, $R_1$, $R_2$ and $R_3$, which are the same or different, are each independently selected from the group consisting of hydrogen, substituted or unsubstituted $C_1$-$C_{20}$ straight or branched alkyl, substituted or unsubstituted $C_6$-$C_{20}$ aryl and substituted or unsubstituted $C_2$-$C_{20}$ alkynyl; preferably, $R_1$, $R_2$ and $R_3$, which are the same or different, are each independently selected from the group consisting of hydrogen, substituted or unsubstituted $C_1$-$C_6$ straight or branched alkyl, substituted or unsubstituted $C_6$-$C_8$ aryl, and substituted or unsubstituted $C_2$-$C_8$ alkynyl; for example, $R_1$, $R_2$ and $R_3$, which are the same or different, can be independently selected from the group consisting of hydrogen, methyl, ethyl, n-propyl, isopropyl, n-butyl, t-butyl, t-butylethynyl, trimethylsilylethynyl, 9-anthracenylalkynyl, etc.;

in the formula I, $R_4$-$R_8$, which are the same or different, are each independently selected from the group consisting of hydrogen, substituted or unsubstituted $C_1$-$C_{20}$ straight or branched alkyl, and any two adjacent groups of $R_4$-$R_8$ are optionally linked to form a ring, for example, a five- or six-membered ring; preferably, $R_4$-$R_8$, which are the same or different, are each independently selected from the group consisting of hydrogen, substituted or unsubstituted $C_1$-$C_6$ straight or branched alkyl, and any two adjacent groups of $R_4$-$R_8$ are optionally linked to form a ring; more preferably, $R_4$-$R_8$, which are the same or different, are each independently selected from the group consisting of hydrogen, substituted or unsubstituted $C_1$-$C_4$ straight or branched alkyl, and any two adjacent groups of $R_4$-$R_8$ can optionally be linked to form a ring; for example, $R_4$-$R_8$, which are the same or different, can each be independently selected from: hydrogen, methyl, ethyl, n-propyl, isopropyl, n-butyl, tert-butyl, etc.;

in formula I, M is an element selected from group IVB, preferably Zr and/or Ti, more preferably Ti; each Q is independently selected from halogen and/or $C_1$-$C_6$ alkyl, preferably halogen and/or $C_1$-$C_3$ alkyl, more preferably chlorine and/or methyl;

in the formula II, $R_1$', $R_2$' and $R_3$', which are the same or different, are each independently selected from the group consisting of substituted or unsubstituted $C_1$-$C_{20}$ straight or branched alkyl, substituted or unsubstituted $C_3$-$C_{20}$ cycloalkyl, and substituted or unsubstituted $C_6$-$C_{20}$ aryl; preferably, $R_1$', $R_2$' and $R_3$', which are the same or different, are each independently selected from the group consisting of substituted or unsubstituted $C_1$-$C_6$ linear or branched alkyl, substituted or unsubstituted $C_3$-$C_6$ cycloalkyl, and substituted or unsubstituted $C_6$-$C_8$ aryl; for example, $R_1$', $R_2$' and $R_3$', which are the same or different, can be independently selected from: methyl, ethyl, n-propyl, isopropyl, n-butyl, tert-butyl, phenyl, etc.;

in the formula II, $R_4$'-$R_8$', which are the same or different, are each independently selected from the group consisting of hydrogen, substituted or unsubstituted $C_1$-$C_{20}$ straight or branched alkyl, and any two adjacent groups of $R_4$'-$R_8$' are optionally linked to form a ring; preferably, $R_4$'-$R_8$', which are the same or different, are each independently selected from the group consisting of hydrogen, substituted or unsubstituted $C_1$-$C_6$ straight or branched alkyl, and any two adjacent groups of $R_4$'-$R_8$' are optionally linked to form a ring; for example, $R_4$'-$R_8$', which are the same or different, can each be independently selected from: hydrogen, methyl, ethyl, n-propyl, isopropyl, n-butyl, tert-butyl, etc.;

in formula II, M' is an element selected from group IVB, preferably Zr and/or Ti, more preferably Ti; Q' is selected from halogen and/or $C_1$-$C_6$ alkyl, preferably halogen and/or $C_1$-$C_3$ alkyl, more preferably chlorine and/or methyl.

In the present invention, when $R_1$-$R_8$ and $R_1$'-$R_8$' are substituted groups (i.e., a group substituted by a substituent), the substituent can be one or more independently selected from the group consisting of halogen, $C_1$-$C_{12}$ alkyl, $C_1$-$C_{12}$ alkoxy, $C_1$-$C_{12}$ silyl, $C_6$-$C_{12}$ aryl, $C_7$-$C_{12}$ aralkyloxy, $C_2$-$C_{12}$ alkynyl and $C_8$-$C_{12}$ arylalkynyl; for example, can be one or more selected from $C_1$-$C_8$ alkyl, for example can be one or more selected from $C_1$-$C_6$ alkyl, for example can be one or more selected from methyl, ethyl, n-propyl, isopropyl, n-butyl and isobutyl.

In some preferred embodiments of the present invention, the half-sandwich metallocene catalyst precursor comprises at least one of the following precursors 1 to 11:

$R_1$=$R_2$=iPr, $R_3$=H, $R_4$-$R_8$=Me, M=Ti, Q=Cl (1);
$R_1$=$R_2$=iPr, $R_3$=H, $R_4$-$R_8$=H, M=Ti, Q=Cl (2);
$R_1$=$R_2$=iPr, $R_3$=H, $R_5$=$R_6$=$R_7$=H, $R_4$ and $R_8$ form a ring and forms indenyl together with cyclopentadienyl (equivalent to Cp' being indenyl), M = Ti, Q = Cl (3);
$R_1$=$R_2$=tBu, $R_3$=H, $R_4$-$R_8$=Me, M=Ti, Q=Cl (4);
$R_1$=$R_2$=H, $R_3$=H, $R_4$-$R_8$=Me, M=Ti, Q=Cl (5);
$R_1$=$R_2$=trimethylsilylethynyl, $R_3$=tBu, $R_4$-$R_8$=Me, M=Ti, Q=Cl (6);
$R_1$=$R_2$=t-butylethynyl, $R_3$=H, $R_4$-$R_8$=Me, M=Ti, Q=Cl (7);
$R_1$=$R_2$=9-anthracenylalkynyl, $R_3$=H, $R_4$-$R_8$=Me, M=Ti, Q=Cl (8);
$R_1$'=$R_2$'=$R_3$'=tBu, $R_4$'-$R_8$'=H, M'=Ti, Q'=Cl (9);
$R_1$'=$R_2$'=$R_3$'=tBu, $R_4$'-$R_8$'=Me, M'=Ti, Q'=Cl (10); and
$R_1$'=$R_2$'=$R_3$'=iPr, $R_4$'-$R_8$'=Me, M'=Ti, Q'=Cl (11).

The half-sandwich metallocene catalyst precursor in the present invention can be prepared by methods well known in the art; for example, it can be prepared similarly according to the methods disclosed in CN112745365A, CN112745405A or CN112745444A.

The catalyst component in the present invention can be prepared by methods well known in the art; for example, it can be prepared according to the methods disclosed in CN112745365A, CN112745405A or CN112745444A.

The alkyl aluminum compound used in the method of the invention can be an alkyl aluminum compound commonly used in the art for olefin polymerization or copolymerization. In some embodiments, according to the present

invention, the alkyl aluminum compound used for premixing with the half-sandwich metallocene catalyst precursor can have the general formula AlR'$_3$, wherein R's, which are the same or different, are $C_1$-$C_8$ alkyls, wherein one or two alkyls are optionally replaced by chlorine; the alkyl aluminum compound preferably is one or more of trimethylaluminum, triethylaluminum, tri-n-butylaluminum, triisobutylaluminum, tri-n-hexylaluminum, alkylaluminum chloride, $Al(n-C_6H_{13})_3$ and $Al(n-C_8H_{17})_3$, further preferably is one or more of trimethylaluminum, triethylaluminum, triisobutylaluminum and tri-n-hexylaluminum, most preferably triisobutylaluminum.

According to the present invention, the premixture of the half-sandwich metallocene catalyst precursor and the alkyl aluminum compound can further comprise a solvent. Preferably, the premixture of the half-sandwich metallocene catalyst precursor and the alkyl aluminum compound further comprises a solvent. In some embodiments, the solvent can be one or more selected from $C_6$-$C_{20}$ aromatic hydrocarbons and $C_4$-$C_{20}$ alkanes; preferably one or more selected from the group consisting of benzene, toluene, xylene, ethylbenzene, hexane, heptane, isobutane and cyclohexane.

According to the present invention, when the premixture of the half-sandwich metallocene catalyst precursor and the alkyl aluminum compound comprises a solvent, preferably the premixture is a homogeneous solution.

According to the present invention, when the premixture of the half-sandwich metallocene catalyst precursor and the alkyl aluminum compound comprises a solvent, the sum of the concentrations (i.e., the total concentration) of the half-sandwich metallocene catalyst precursor and the alkyl aluminum compound in the premixture can be 0.01 to 10 g/L, preferably 0.1 to 3 g/L, and more preferably 0.1 to 2 g/L.

According to the present invention, preferably, the olefin polymerization catalyst component is obtained by contacting the half-sandwich metallocene catalyst precursor with the alkyl aluminum compound.

**In** a preferred embodiment of the present invention, the olefin polymerization catalyst component can be obtained in the following manner: mixing the half-sandwich metallocene catalyst precursor with the alkyl aluminum compound in a solvent for 0.5-30 min, preferably 15-30 min. **In** some embodiments, preferably, the mixed solution obtained after mixing can be left to stand for 0.5 to 48 hours, preferably for 0.5 to 24 hours. In an embodiment, the olefin polymerization catalyst component is obtained by a manner comprising: mixing the half-sandwich metallocene catalyst precursor and the alkyl aluminum compound in a solvent for 15-30 min, and preferably standing the mixed solution for 0.5-24 h.

The above mixing and standing can be carried out, for example, at 0 to 60 °C, for example, 10 to 45 °C, preferably at room temperature.

**In** some embodiments, the mixing and standing are carried out in the presence of an inert gas. The inert gas includes, but not limited to, one or more of nitrogen and rare gases such as helium, neon, and argon.

**In** some embodiments, the preparation of the catalyst component can include: adding a half-sandwich metallocene catalyst precursor and an alkyl aluminum compound separately into a solvent; adding a half-sandwich metallocene catalyst precursor into a container and then adding a solution of an alkyl aluminum compound; adding a solution of an alkyl aluminum compound into a container and then adding a half-sandwich metallocene catalyst precursor; and the like.

According to the invention, the molar ratio of the half-sandwich metallocene catalyst precursor to the alkyl aluminum compound in the premixture can be 1:(2-200), preferably 1:(2-100), more preferably 1:(20-100).

The organoboron compound used in the method of the present invention can be an organoboron compound which is commonly used in the art for olefin polymerization or copolymerization. In some embodiments, the organoboron compound can be selected from fluoroorganoboron compounds and/or fluoroorganoborate compounds.

In some embodiments, the fluoroorganoboron compound can be selected from tris(pentafluorophenyl)boron and/or tris[3,5-bis(trifluoromethyl)phenyl]boron.

In some embodiments, the fluoroorganoborate compound is selected from fluorinated aryl borates, preferably one or more selected from the group consisting of N,N-dimethylanilinium tetrakis(pentafluorophenyl)borate, triphenyl tetrakis(pentafluorophenyl)borate, trityl tetrakis(pentafluorophenyl)borate, lithium tetrakis(pentafluorophenyl)borate, N,N-dimethylanilinium tetrakis[3,5-bis(trifluoromethyl)phenyl]borate, and triphenylcarbenium tetrakis[3,5-bis(trifluoromethyl)phenyl]borate.

The organoaluminum compound used in the method of the present invention as the catalyst component C can be an organoaluminum compound which is commonly used in the art for olefin polymerization or copolymerization. In some embodiments, the organoaluminum compound as catalyst component C can be selected from alkylaluminum compounds and/or organoaluminoxane compounds. The alkylaluminum compounds and the organoaluminoxane compounds can be those commonly used for olefin polymerization or copolymerization.

In some embodiments, the alkylaluminum compound can have the general formula AlR'$_3$, wherein R's, which are the same or different, are $C_1$-$C_8$ alkyls, wherein one or two alkyls can optionally be replaced by chlorine. In some embodiments, the alkylaluminum compound preferably is one or more of trimethylaluminum, triethylaluminum, tri-n-butylaluminum, triisobutylaluminum, tri-n-hexylaluminum, alkylaluminum chloride, $Al(n-C_6H_{13})_3$ and $Al(n-C_8H_{17})_3$, further preferably is one or more of trimethylaluminum, triethylaluminum, triisobutylaluminum and tri-n-hexylaluminum, most preferably triisobutylaluminum.

In some embodiments, the organoaluminoxane compound can have the following general structure:

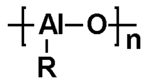

wherein R is selected from $C_1$-$C_{12}$ hydrocarbyl, preferably $C_1$-$C_6$ alkyl, more preferably methyl and/or isobutyl.

In the present invention, the organoaluminum compound (catalyst component C) in the catalyst and the alkyl aluminum compound used in the premixture can be the same or different compounds.

According to the invention, the molar ratio of the catalyst component (component A) (calculated by the half-sandwich metallocene catalyst precursor), the organoboron compound (component B) and the organoaluminum compound (component C) can be 1:(1-20):(50-3000). In some embodiments, the molar ratio of the catalyst component (calculated by the half-sandwich metallocene catalyst precursor), the organoboron compound and the organoaluminum compound can be 1:(2-10):(100-500), from the perspective of improving further copolymerization performance and catalytic activity.

Without being limited by theory, the co-catalyst organoaluminum compound added during the reaction process can react with polar impurities in the polymerization reaction mixture to prevent catalyst deactivation, and also play the rule of alkylating the catalyst. The organoboron compound can act as a Lewis acid and a protonic acid to activate the catalyst.

The present invention has no particular limitation on the order of adding the catalyst precursor, the boron compound and the alkyl aluminum compound in above catalyst, as long as it can catalyze the copolymerization reaction of ethylene and $\alpha$-olefin. In some embodiments, according to the present invention, component A, component B and component C in the catalyst can be added sequentially, can be added simultaneously, or two of them can be added first and then the last one can be added. In some embodiments, preferably, component A and component C are added separately into the polymerization system. Without being limited by theory, by adding component A and component C separately to the polymerization system, there is an advantage of reducing the influence of impurities.

According to the invention, the copolymerization reaction is carried out in an inert solvent. Solvents commonly used in the art for olefin polymerization or copolymerization can be used. In some embodiments, the inert solvent can be one or more selected from $C_6$-$C_{20}$ aromatic hydrocarbons and $C_4$-$C_{20}$ alkanes, preferably one or more selected from benzene, toluene, hexane, and heptane.

In the method according to the present invention for preparing an ethylene/$\alpha$-olefin copolymer, the copolymerization reaction further comprises adding a terminator after the polymerization reaction is completed to terminate the polymerization reaction, i.e., deactivate the active centers. There is no particular limitation on the terminator, which can be various terminators that can terminate active polymer chains in the field of olefin polymerization. In some embodiments, the terminator can be, for example, one or more of water, methanol, ethanol, n-propanol, and isopropanol.

The invention also provides an ethylene/$\alpha$-olefin copolymer prepared by the above method.

The ethylene/$\alpha$-olefin copolymer of the present invention has no unsaturated double bonds, has excellent weather resistance and chemical resistance; has higher shear sensitivity and high melt strength, is easy to process and apply, and is easy to recover and recycle. The ethylene/$\alpha$-olefin copolymer of the present invention can replace some rubbers or can be used as a thermoplastic elastomer, for use in the fields of high-performance films, toughening modification of automotive materials, buildings, electronic and electric appliances, daily necessities, medical devices or the like.

Examples

The present invention will be further described with reference to the following Examples, but the scope of the present invention is not limited to these Examples.

Unless otherwise specified, the operation and treatment methods involved in the invention are all conventional operations and treatments in the art.

Unless otherwise specified, the instruments used in the present invention are all conventional instruments in the art.

The testing methods involved in the Examples of the present invention are as follows.

Melting point ($T_m$) and crystallinity

Melting point and crystallinity are measured by differential scanning calorimeter (DSC 822e, METTLER TOLEDO), wherein the heating rate and cooling rate are 10°C/min, and the data are read on the second scanning curve.

Melt flow rate (melt index, MFR)

It is measured by CEAST6942 melt flow rate meter manufactured by Ceast, Italy according to GB/T 3682.2-2018. The temperature is 190 °C and the load is 2.16 kg.

Density of polymer

It is measured by density gradient column according to GB/T 1033.2-2010.

Content of α-olefin in polymer

It is measured by high temperature nuclear magnetic resonance carbon spectroscopy. The high temperature nuclear magnetic resonance carbon spectroscopy is measured at 110°C using Bruke 400 NMR spectrometer with 1,2,4-trichlorobenzene as solvent so as to obtain the testing results.

Activity of polymerization

It is expressed as the ratio of the mass of the obtained polymer to the molar amount of metal in the catalyst and the reaction time, that is, activity = polymer mass/(molar amount of metal in the catalyst × reaction time).

Crystallization elution fractionation (CEF) method

The polymer sample (20 mg) is weighed into a sample vial and loaded onto the autosampler of the polymer CEF unit (model CEF instrument of Polymer Char, Spain). The vial is filled with 6 mL to 7 mL of 1,2,4-trichlorobenzene (TCB) and heated to the dissolution temperature (160°C) at a shaking rate of 3-stage for 2 hours. Then the solution (0.5 mL) is loaded onto the CEF column (two CEF columns purchased from Polymer Char and installed in series). After equilibrating at the given stabilization temperature (130°C) for 5 minutes, the polymer solution is allowed to crystallize when the temperature is decreased from the stabilization temperature to 30°C. After equilibrating at 30°C for 10 minutes, the soluble fraction is eluted at 30°C for 10 minutes, followed by eluting the crystallized sample with TCB at temperature increasing from 30°C to 130°C. The CEF column is cleaned at 150°C for 5 minutes at the end of the run. Other CEF run conditions are as follows: cooling rate of 0.5°C/min, flow rate during crystallization of 0.02 mL/min, heating rate of 1.0°C/min and flow rate during elution of 2.0 mL/min. The eluted sample is measured for outflowing temperature and comonomer content by infrared detector IR5.

DSC characterization of CEF fractions

Each fraction obtained by CEF fractionation is air-dried and dried in a vacuum oven at 80°C for 8 hours, and then the solid is weighed so as to obtain the content of each fraction.
DSC test is then performed by DSC (DSC822e, METTLER TOLEDO). The heating rate is 10°C/min, and the data of the first and second scan curves are recorded.
Before DSC test, 0.5 g of the vacuum-dried fraction is soaked in 10 mL of xylene at room temperature for 7 days to remove low melting point components and then air-dried. After drying under vacuum (drying in a vacuum oven at 80 degrees Celsius for 8 hours), DSC characterization is performed.

Low field NMR test

Time-domain 1H NMR T2 relaxation experiment and spin diffusion experiment are both performed on a Bruker Minispec MQ-20 (F series) relaxometer. The proton resonance frequency of the equipment is 19.65 MHz, and the temperature of the permanent magnet is always maintained at 40°C. The pulse times of radio frequency pulses 90° and 180° are 3.1 μs and 6.2 μs, respectively, the receiver dead time is 9 μs, and the dwell time is set to be 0.64 μs. The NMR equipment is equipped with a 10 mm temperature probe and the accurate adjustment of the testing temperature is achieved by using a Bruker N2VT temperature controller, with an accuracy of ± 0.5°C. To ensure the accuracy of the temperature, the equipment temperature is calibrated using a PT100RTD thermocouple (HH804U) before the start of the test. A sample with a height of about 12 mm is filled in a 9 mm diameter NMR tube to ensure that the test sample is at the most uniform position of the equipment's RF field.

Determination of the molar concentration ratio of ethylene to α-olefin

The molar concentration ratio of ethylene to α-olefin during the polymerization process is determined in the following manner: 10 mL of solution is taken out at a time interval, such as 2 minutes, 5 minutes, or 10 minutes; the solution taken out is poured into ethanol to obtain the polymer, and the obtained polymer is dried in a vacuum oven at 80°C for 8 hours, and then the content of comonomer in the copolymer is determined by high temperature nuclear magnetic resonance carbon spectroscopy, and then the consumption amount of comonomer is obtained; the molar concentration of α-olefin is determined according to the concentration of the polymer in the solution, the structure of the polymer and the comonomer feeding amount, and in turn, the supplementary amount of comonomer is determined to ensure that the desired molar concentration ratio of ethylene to α-olefin is achieved.

The structures of the half-sandwich metallocene catalyst precursors used in the Examples and Comparative Examples are as follows:

$R_1$=$R_2$=iPr, $R_3$=H, $R_4$-$R_8$=Me, M=Ti, Q=Cl (precursor 1);
$R_1$=$R_2$=iPr, $R_3$=H, $R_4$-$R_8$=H, M=Ti, Q=Cl (precursor 2);
$R_1$=$R_2$=iPr, $R_3$=H, $R_5$=$R_6$=$R_7$=H, $R_4$ and $R_8$ form a ring and forms indenyl together with cyclopentadienyl, M=Ti, Q=Cl (precursor 3);
$R_1$=$R_2$=tBu, $R_3$=H, $R_4$-$R_8$=Me, M=Ti, Q=Cl (precursor 4);
$R_1$=$R_2$=H, $R_3$=H, $R_4$-$R_8$=Me, M=Ti, Q=Cl (precursor 5);
$R_1$=$R_2$=trimethylsilylethynyl, $R_3$=tBu, $R_4$-$R_8$=Me, M=Ti, Q=Cl (precursor 6);
$R_1$=$R_2$=t-butylethynyl, $R_3$=H, $R_4$-$R_8$=Me, M=Ti, Q=Cl (precursor 7);
$R_1$=$R_2$=9-anthracenylalkynyl, $R_3$=H, $R_4$-$R_8$=Me, M=Ti, Q=Cl (precursor 8);
$R_1$'=$R_2$'=$R_3$'=tBu, $R_4$'-$R_8$'=H, M'=Ti, Q'=Cl (precursor 9);
$R_1$'=$R_2$'=$R_3$'=tBu, $R_4$'-$R_8$'=Me, M'=Ti, Q'=Cl (precursor 10);
$R_1$'=$R_2$'=$R_3$'=iPr, $R_4$'-$R_8$'=Me, M'=Ti, Q'=Cl (precursor 11).

In the following preparation Examples, various reagents and reactants used are commercially available products; if required, the necessary treatments known in the art are performed to meet the requirements of the reaction.

Example 1

The preparation of the catalyst component was carried out in a nitrogen-protected glove box and the temperature was room temperature (25 °C). 5μmol of the precursor 1 powder was weighed and placed in a glass bottle, 0.2 mL hexane solution of triisobutylaluminum with a concentration of 0.5 mol/L was added dropwise, 4.8 mL of toluene was further added, and stirring was performed for about 30 minutes to obtain an orange-red toluene solution of catalyst component 1, and it was left to stand for 24 hours.

The reactor was a 500 m L autoclave with a stirrer. Before reaction, conventional dehydration and deoxygenation treatments were carried out, and polymerization-grade ethylene was introduced for replacement for 3 times. 183.75 mL of purified toluene (solvent) was charged into the autoclave at first, and then 0.75 mL of a 1 mol/L hexane solution of triisobutylaluminum, 12.5 mL of purified 1-octene, 1 mL of a 5 mmol/L toluene solution of catalyst component 1, and 2 mL of a 5 mmol/L toluene solution of trityl tetrakis(pentafluorophenyl) borate were sequentially added thereto. The reactor temperature was raised to 30 °C and ethylene was continuously fed, wherein the reactor pressure was maintained at 0.4 MPa. After 10 minutes of reaction, 7.8 mL of purified 1-octene was additionally added, and after a total reaction time of 20 minutes, 6.5 mL of purified 1-octene was added for the third time. The molar concentration ratio of the ethylene to the 1-octene in the reactor was maintained between 1.1 and 1.3 throughout the reaction process. After a total reaction time of 30 minutes, the feeding of ethylene was stopped, and ethanol was added to terminate the reaction. The temperature was decreased to 20 °C for discharging, and the mixture was added into three times of ethanol and filtered; the obtained polymer was dried in a vacuum oven at 80 °C overnight, and the weight of the polymer was weighed to be 33.8 g. The polymerization activity was $1.35 \times 10^7$ $g \cdot mol^{-1}(cat) \cdot h^{-1}$, the density was 0.866 $g/cm^3$, the mass content of octene was 40%, the melting point was 119.5 °C, the crystallinity was 5.314%, and the melt index was 15.1 g/10 min.

The obtained copolymer was subjected to differential scanning calorimeter test; wherein the copolymer was heated to 180 °C at the speed of 10 °C/min, and the peak temperature of the generated melting peak was recorded as $T_m$; after being stabilized for 10 minutes, the copolymer was cooled to - 50 °C at the speed of 10 °C/min and then the copolymer was heated to $T_1$ at the speed of 10 °C/min; after being stabilized for 10 minutes, the copolymer was cooled to - 50 °C at the speed of 10 °C/min, a crystallization exothermic peak was generated and the peak temperature was recorded as $T_2$. By changing the starting cooling temperature $T_1$ to different values, multiple groups of crystallization curves were obtained, as shown in Figure 1. It can be seen that when the $T_1$ temperature fell within the range of $T_m < T_1 \leq T_m$+20 °C, $T_2$ increased with the decreasing of $T_1$, and when the $T_1$ temperature > $T_m$+20 °C, $T_2$ did not change with the decreasing of $T_1$.

Example 2

The polymerization was carried out according to the method of Example 1, with the differences that: 177.9 mL of hexane was used as solvent; three batches of 1-octene were added in amounts of 15.6 mL, 7.8 mL and 6.7 mL, respectively; the molar concentration ratio of ethylene to 1-octene in the reactor was maintained between 0.6 and 0.8 throughout the reaction process; the adding amount of 1 mol/L hexane solution of triisobutylaluminum was 1.5 mL; the adding amount of 5 mmol/L toluene solution of trityl tetrakis(pentafluorophenyl) borate was 5 mL; and the reactor temperature was 60 °C. 27.1 g of polymer was obtained with a polymerization activity of $1.08\times10^7$ $g\cdot mol^{-1}(cat)\cdot h^{-1}$, a density of 0.861 $g/cm^3$, an octene mass content of 51%, a melting point of 110.5 °C, a crystallinity of 0.186% and a melt index of 382.4 g/10 min.

Example 3

The polymerization was carried out according to the method of Example 1, with the differences that: 176.7 mL of hexane was used as solvent; two batches of 1-octene were added in amounts of 9.3 mL and 4.5 mL, and the 2$^{nd}$ addition was at the 15$^{th}$ minute; the molar concentration ratio of ethylene to 1-octene in the reactor was maintained between 0.8 and 1.0 throughout the reaction process; the total reaction time was 30 minutes; the adding amount of 1 mol/L hexane solution of triisobutylaluminum was 3 mL; the adding amount of 5 mmol/L toluene solution of trityl tetrakis(pentafluorophenyl) borate was 10 m L; and the reactor temperature was 80 °C. 19.4 g of polymer was obtained with a polymerization activity of $7.76\times10^6$ $g\cdot mol^{-1}(cat)\cdot h^{-1}$, a density of 0.862 $g/cm^3$, an octene mass content of 44%, a melting point of 120.4 °C, a crystallinity of 7.79% and a melt index of 7.7 g/10 min.

Example 4

The polymerization was carried out according to the method of Example 1, with the differences that: the polymerization pressure was 0.8 MPa; the amount of toluene added was 180.25 mL; three batches of 1-octene were added in amounts of 16 mL, 8.4 mL and 7.5 mL, respectively; the molar concentration ratio of ethylene to 1-octene in the reactor was maintained between 1.9 and 2.1 throughout the reaction process; 2 mL of a toluene solution of N,N-dimethylanilinium tetrakis(pentafluorophenyl)borate at a concentration of 5 mmol/L was added in place of the toluene solution of trityl tetrakis(pentafluorophenyl) borate. 35.8 g of polymer was obtained with a polymerization activity of $1.43\times10^7$ $g\cdot mol^{-1}(cat)\cdot h^{-1}$, a density of 0.872 $g/cm^3$, an octene mass content of 36%, a melting point of 120.0 °C, a crystallinity of 6.83%, and a melt index of 0.47 g/10 min.

Example 5

The polymerization was carried out according to the method of Example 1, with the differences that: the solvent was 188.75 mL hexane; the polymerization monomer was 1-hexene which was added in three batches, the addition timings were the same as in Example 1, and the addition amounts were 10 mL, 5.0 mL and 4.5 mL, respectively; the molar concentration ratio of ethylene to 1-hexene in the reactor was maintained between 1.1 and 1.3 throughout the reaction process. 25.8 g of polymer was obtained with a polymerization activity of $1.03\times10^7$ $g\cdot mol^{-1}(cat)\cdot h^{-1}$, a density of 0.866 $g/cm^3$, a hexene mass content of 35%, a melting point of 122.6 °C, a crystallinity of 4.30% and a melt index of 0.77 g/10 min.

The obtained copolymer was subjected to differential scanning calorimeter test; wherein the copolymer was heated to 180 °C at the speed of 10 °C/min, and the peak temperature of the generated melting peak was recorded as $T_m$; after being stabilized for 10 minutes, the copolymer was cooled to - 50 °C at the speed of 10 °C/min and then the copolymer was heated to $T_1$ at the speed of 10 °C/min; after being stabilized for 10 minutes, the copolymer was cooled to - 50 °C at the speed of 10 °C/min, a crystallization exothermic peak was generated and the peak temperature was recorded as $T_2$. By changing the starting cooling temperature $T_1$ to different values, multiple groups of crystallization curves were obtained, as shown in Figure 2. It can be seen that when the $T_1$ temperature fell within the range of $T_m < T_1 \leq T_m+20$ °C, $T_2$ increased with the decreasing of $T_1$, and when the $T_1$ temperature > $T_m+20$ °C, $T_2$ did not change with the decreasing of $T_1$.

Example 6

The polymerization was carried out according to the method of Example 1, with the differences that: the solvent was 181.15 mL heptane; the polymerization monomer was 1-decene which was added in three batches, the addition timings were the same as in Example 1, and the addition amounts were 15.1 mL, 8.7 mL and 7.5 mL, respectively; the molar concentration ratio of ethylene to 1-decene in the reactor was maintained between 1.1 and 1.3 throughout the reaction process. 38.3 g of polymer were obtained with a polymerization activity of $1.53\times10^7$ $g\cdot mol^{-1}(cat)\cdot h^{-1}$, a density of 0.866 $g/cm^3$, a decene mass content of 42%, a melting point of 124.2 °C, a crystallinity of 9.49% and a melt index of 22.9 g/10 min.

The obtained copolymer was subjected to differential scanning calorimeter test; wherein the copolymer was heated to 180 °C at the speed of 10 °C/min, and the peak temperature of the generated melting peak was recorded as $T_m$; after being stabilized for 10 minutes, the copolymer was cooled to - 50 °C at the speed of 10 °C/min and then the copolymer was heated to $T_1$ at the speed of 10 °C/min; after being stabilized for 10 minutes, the copolymer was cooled to - 50 °C at the speed of 10 °C/min, a crystallization exothermic peak was generated and the peak temperature was recorded as $T_2$. By changing the starting cooling temperature $T_1$ to different values, multiple groups of crystallization curves were obtained, as shown in Figure 3. It can be seen that when the $T_1$ temperature fell within the range of $T_m < T_1 \leq T_m$+20 °C, $T_2$ increased with the decreasing of $T_1$, and when the $T_1$ temperature > $T_m$+20 °C, $T_2$ did not change with the decreasing of $T_1$.

Example 7

The polymerization was carried out according to the method of Example 5, with the differences that: the catalyst precursor 3 was used; 1-hexene was added in three batches, the addition timings were the same as in Example 1 and the addition amounts were 10 mL, 1.3 mL and 1.0 mL respectively; the molar concentration ratio of ethylene to 1-hexene in the reactor was maintained between 1.1 and 1.3 throughout the reaction process. 5.25 g of polymer was obtained with a polymerization activity of $2.10\times10^6$ g·mol$^{-1}$(cat)·h$^{-1}$, a density of 0.856 g/cm$^3$, a hexene mass content of 49%, a melting point of 121.2 °C, a crystallinity of 0.17%, and a melt index of 114.9 g/10 min.

Example 8

The polymerization was carried out according to the method of Example 5, with the difference that: catalyst precursor 9 was used.

38.9 g of polymer was obtained with a polymerization activity of $1.56\times10^7$ g·mol$^{-1}$(cat)·h$^{-1}$, a density of 0.860 g/cm$^3$, a hexene mass content of 47%, a melting point of 124.8 °C, a crystallinity of 4.30% and a melt index of 153 g/10 min.

Example 9

The polymerization was carried out according to the method of Example 1, with the differences that: the catalyst precursor 2 was used; three batches of 1-octene were added in amounts of 12.5 mL, 1.6 mL and 1.3 mL respectively; the molar concentration ratio of ethylene to 1-octene in the reactor was maintained between 1.1 and 1.2 throughout the reaction process. 7.44 g of polymer was obtained with a polymerization activity of $2.98\times10^6$ g·mol$^{-1}$(cat)·h$^{-1}$, a density of 0.861 g/cm$^3$, a octene mass content of 45%, a melting point of 108.4 °C, a crystallinity of 0.492%, and a melt index of 212 g/10 min.

Example 10

The polymerization was carried out according to the method of Example 1, with the difference that: catalyst precursor 4 was used.

35.7 g of polymer was obtained with a polymerization activity of $1.43\times10^7$ g·mol$^{-1}$(cat)·h$^{-1}$, a density of 0.864 g/cm$^3$, an octene mass content of 43%, a melting point of 116 °C, a crystallinity of 2.38% and a melt index of 7.54 g/10 min.

Example 11

The polymerization was carried out according to the method of Example 1, with the differences that: the catalyst precursor 5 was used; three batches of 1-octene were added in amounts of 12.5 mL, 1.0 mL and 1.0 mL respectively; the molar concentration ratio of ethylene to 1-octene in the reactor was maintained between 1.1 and 1.2 throughout the reaction process. 4.47 g of polymer was obtained with polymerization activity of $1.79\times10^6$ g·mol$^{-1}$(cat)·h$^{-1}$, a density of 0.862 g/cm$^3$, an octene mass content of 45%, a melting point of 90 °C, a crystallinity of 1.57%, and a melt index of 93.8 g/10 min.

Example 12

Polymerization was carried out according to the method of Example 9, with the difference that: catalyst precursor 6 was used.

6.68 g of polymer was obtained with a polymerization activity of $2.67\times10^6$ g·mol$^{-1}$(cat)·h$^{-1}$, a density of 0.868 g/cm$^3$, an octene mass content of 39%, a melting point of 122 °C, a crystallinity of 4.17%, and a melt index of 3.12 g/10 min.

Example 13

Polymerization was carried out according to the method of Example 9, with the difference that: catalyst precursor 7 was used.

6.02 g of polymer was obtained with a polymerization activity of $2.41\times10^6$ g·mol$^{-1}$(cat)·h$^{-1}$, a density of 0.866 g/cm$^3$, an octene mass content of 41%, a melting point of 113 °C, a crystallinity of 2.38% and a melt index of 7.54 g/10 min.

Example 14

Polymerization was carried out according to the method of Example 9, with the difference that: catalyst precursor 8 was used.

8.74 g of polymer was obtained with a polymerization activity of $3.50\times10^6$ g·mol$^{-1}$(cat)·h$^{-1}$, a density of 0.864 g/cm$^3$, a octene mass content of 43%, a melting point of 115.6 °C, a crystallinity of 1.68%, and a melt index of 18.04 g/10 min.

Example 15

The polymerization was carried out according to the method of Example 1, with the difference that: catalyst precursor 10 was used.

41.9 g of polymer was obtained with a polymerization activity of $1.68\times10^7$ g·mol$^{-1}$(cat)·h$^{-1}$, a density of 0.865 g/cm$^3$, an octene mass content of 42%, a melting point of 106 °C, a crystallinity of 3.46%, and a melt index of 6.55 g/10 min.

Example 16

Polymerization was carried out according to the method of Example 9, with the difference that: catalyst precursor 11 was used.

7.76 g of polymer were obtained with a polymerization activity of $3.1\times10^6$ g·mol$^{-1}$(cat)·h$^{-1}$, a density of 0.863 g/cm$^3$, an octene mass content of 43%, a melting point of 95 °C, a crystallinity of 0.667%, and a melt index of 43.4 g/10 min.

Comparative Example 1

The reactor was a 500 m L autoclave with a stirrer. Before reaction, conventional dehydration and deoxygenation treatments were carried out, and polymerization-grade ethylene was introduced for replacement for 3 times. 183.75 mL of purified toluene was charged into the autoclave at first, and then 0.75 mL of a 1 mol/L hexane solution of triisobutylaluminum, 26.8 mL of purified 1-octene, 1 mL of a 5 mmol/L toluene solution of CGC-Ti catalyst component, and 2 mL of a 5 mmol/L toluene solution of trityl tetrakis(pentafluorophenyl) borate were sequentially added thereto. The reactor temperature was raised to 30 °C and ethylene was continuously fed, wherein the reactor pressure was 0.4 MPa. After a reaction time of 30 minutes, the feeding of ethylene was stopped, and ethanol was added to terminate the reaction. The temperature was decreased to 20 °C for discharging, and the mixture was added into three times of ethanol and filtered; the obtained polymer was dried in a vacuum oven at 80 °C overnight, and the weight of the polymer was weighed to be 10.8 g. The polymerization activity was $1.28\times10^7$ g·mol$^{-1}$(cat)·h$^{-1}$, the density was 0.869 g/cm$^3$, the octene mass content was 38%, the melting point was 57 °C, the crystallinity was 9.46%, and the melt index was 1.26 g/10 min.

Comparative Example 2

The polymerization was carried out by using the method of Example 1, with the difference that: all 26.8 mL of purified 1-octene was added in one portion, and the molar concentration ratio of ethylene to 1-octene in the reactor would less than 0.55 at the initial stage of the reaction. 28.8 g of polymer was obtained with a polymerization activity of $1.15\times10^7$ g·mol$^{-1}$(cat)·h$^{-1}$; a density of <0.850 g/cm$^3$; an octene mass content of 60%; no evident melting point was observed, and thus it was unable to calculate crystallinity; and a melt index of 93 g/10 min.

Examples 17 to 18 and Comparative Example 3

A continuous solution polymerization operation method was adopted, and ethylene, 1-octene, a primary catalyst solution, a toluene solution of trityl tetrakis(pentafluorophenyl)borate, and a triisobutylaluminum solution were continuously introduced into a 1.8 L polymerization kettle for reaction. The introduction rates of ethylene and 1-octene were such that the molar concentration ratio of ethylene to 1-octene in the reaction system was always maintained at 1.1-1.3. After the reaction, the solution was collected in a post-treatment tank, and ethanol was added to the tank. After completion of the

reaction, 200 mL of polymer solution was taken and introduced into 600 mL ethanol to precipitate the product, which was filtered. The obtained polymer was dried overnight at 80 °C in a vacuum oven and the product was characterized. The results are shown in Table 1.

TABLE 1

| No. | type of catalyst | polymerization activity $g \cdot mol^{-1} (cat) \cdot h^{-1}$ | density $g/cm^3$ | melt index g/10min | comonomer content wt% | melting point °C | crystallinity % |
|---|---|---|---|---|---|---|---|
| Example 17 | toluene solution of catalyst component 1 of Example 1 | $1.21 \times 10^7$ | 0.868 | 3.45 | 39 | 126 | 1.47 |
| Example 18 | toluene solution of catalyst component 1 of Example 1 | $1.09 \times 10^7$ | 0.865 | 12.4 | 41 | 125 | 1.87 |
| Comparative Example 3 | CGC-Ti | $1.01 \times 10^7$ | 0.872 | 2.34 | 36 | 62 | 7.37 |

High temperature nuclear magnetic resonance carbon spectroscopy measurements

The copolymers of Examples 2, 17 and 18 and Comparative Example 3 were tested using high temperature nuclear magnetic resonance method and Dow 8150 and the polymer of Example 1 of CN110272515B were tested. The structural data of the copolymers measured are shown in the following table. In the table, E represents ethylene structural unit, and O represents $\alpha$-olefin structural unit.

| sequence structure | mass content (total 1) | | molar content (total 1) | | molar content(total 1) | | | molar content(total 1) | | | | | |
|---|---|---|---|---|---|---|---|---|---|---|---|---|---|
| | E | O | E | O | EE | EO | OO | EEE | EEO | OEO | EOE | OOE | OOO |
| Example 2 | 0.490 | 0.510 | 0.793 | 0.207 | 0.652 | 0.283 | 0.065 | 0.575 | 0.153 | 0.060 | 0.110 | 0.074 | 0.028 |
| Examplel7 | 0.607 | 0.393 | 0.861 | 0.139 | 0.747 | 0.228 | 0.025 | 0.671 | 0.152 | 0.018 | 0.119 | 0.030 | 0.010 |
| Example18 | 0.541 | 0.459 | 0.825 | 0.175 | 0.677 | 0.295 | 0.028 | 0.562 | 0.230 | 0.027 | 0.134 | 0.038 | 0.009 |
| Comparative Example 3 | 0.638 | 0.362 | 0.876 | 0.124 | 0.763 | 0.225 | 0.012 | 0.661 | 0.204 | 0.008 | 0.105 | 0.019 | 0.002 |
| Dow 8150 | 0.615 | 0.385 | 0.865 | 0.135 | 0.743 | 0.243 | 0.014 | 0.641 | 0.205 | 0.019 | 0.112 | 0.019 | 0.004 |
| polymer of Example 1 of CN110272515B | 0.616 | 0.384 | 0.865 | 0.135 | 0.751 | 0.229 | 0.020 | 0.647 | 0.207 | 0.012 | 0.098 | 0.032 | 0.004 |

It can be seen that the copolymers of the present application have a much higher content of OOO sequence structure than the copolymer of Comparative Example 3.

The content of block copolymer was calculated by using the proportions of the sequence structures by the following formula:

$$W_{block\ copolymer} = 336 \times n_{OOO}/[336 \times n_{OOO} + 84 \times n_{EEE} + 168 \times (n_{EEO} + n_{EOE}) + 252 \times (n_{OEO} + n_{OOE})]$$

wherein $n_{OOO}$, $n_{EEE}$, $n_{EEO}$, $n_{EOE}$, $n_{OEO}$ and $n_{OOE}$ are the molar percentage contents of OOO, EEE, EEO, EOE, OEO and OOE sequence structures, respectively.

The contents of the block copolymer obtained by calculation are shown in the following table.

| | Example 2 | Example 17 | Example 18 | Comparative Example 3 | Dow 8150 | polymer of Example 1 of CN110272515B |
|---|---|---|---|---|---|---|
| $W_{block\ copolymer/\%}$ | 6.9 | 2.7 | 2.4 | 0.6 | 1.1 | 1.1 |

Low field nuclear magnetic resonance test

The copolymers of Examples 1 and 17 and a blend of POE 8150 (DOW) and HDPE (LyondellBasel 4261) were measured using a low field nuclear magnetic resonance relaxation test; the results are shown in FIGS. 4a and 4b. Wherein, POE-5 is the copolymer of Example 1 and HMPOE is the copolymer of Example 17. The blend of POE 8150 and HDPE blend was obtained by: dissolving HDPE and POE 8150 (5:95 by weight) in xylene at 140 °C, mixing uniformly, and pouring the solution into acetone rapidly to precipitate out. In FIG. 4a, 121 indicates the testing results when the sample just reaches 121 °C when it is heated to melt, and 121melt indicates the test results when the sample just reaches 121° C when it is cooled to crystallize.

The relaxation experiments show that the HDPE mixed in does not affect the network relaxation behavior of POE 8150, while the state (melting or crystallization) of the high melting point component in the copolymer of the present application significantly affects the network relaxation behavior of the system, which indicates that the high melting point component in the copolymer of the present application comprises a long-sequence ethylene block linked to a molecular block mainly composed of $\alpha$-olefin (i.e., the high melting point ethylene block in the high melting point component is chemically linked to the molecular block mainly composed of octenes arranged side by side, and is not present in the form of physical blending like POE and LLDPE); this is because at 121 °C, a portion of polyethylene segments are still not melted, and these unmelted segments limit the mobility of polymer molecular chains.

FIGS. 5a-5c show the results of low field nuclear magnetic resonance relaxation experiments for LLDPE (DOW 2045G), commercial POE product LC670 (LG) and a blend thereof. The blend of LC670 and LLDPE was obtained by: dissolving POE LC670 and LLDPE (95:5 by weight) in xylene at 140 °C, mixing uniformly, and pouring the solution rapidly into acetone to precipitate out.

The relaxation experimental results show that for the LLDPE/LC670 blend, LLDPE does not affect the network relaxation behavior of LC 670.

FIGS. 6a-6c show the results of low field nuclear magnetic resonance relaxation experiments for comparative sample (polymer of Example 1 of CN110272515B) and copolymers of Comparative Example 3 and Comparative Example 1 of the present invention, respectively.

Crystallization Elution Fractionation (CEF) test

Copolymers POE-1 and POE-2 were prepared, respectively, into three fractions, i.e., the three fractions of <40 °C, 40 °C to 80 °C, and >80 °C, using Crystallization Elution Fractionation (CEF) test, and DSC characterization was performed. Wherein copolymer POE-1 was the copolymer obtained in Example 17, and copolymer POE-2 was the copolymer obtained in Example 18.

The content of the <40 °C fraction was calculated by the tested concentration and was given directly by the instrument; the content ratio of the 40 °C to 80 °C fraction and the >80 °C fraction was determined by peak area ratio, and the respective contents were given by the instrument according to the content of the <40 °C fraction. The Crystallization Elution Fractionation (CEF) elution curves were shown in Fig. 9.

The results of the Crystallization Elution Fractionation (CEF) test are shown in the table below.

| Sample | Content% <40 °C | Content% 40-80 °C | Content% >80 °C |
|---|---|---|---|
| POE-1 | 88.8 | 7.1 | 4.1 |
| POE-2 | 90.4 | 2.5 | 7.1 |

The fractions separated by CEF were air dried, dried in a vacuum oven at 80 °C for 8 hours, and then the solids were weighed to obtain the contents of each fraction.

Prior to DSC testing, 0.5g of the fraction which has been dried in vacuum was soaked in 10mL of xylene at room temperature for 7 days, air dried after removal of low melting point constituents, and subjected to DSC characterization after drying under vacuum (drying in a vacuum oven at 80 °C for 8 hours).

Wherein, FIG. 7a shows the DSC curve of the 40 °C-80 °C fraction of POE-1; FIG. 7b shows the DSC curve of the <40 °C fraction of POE-1; FIG. 7c shows the DSC curve of the >80 °C fraction of POE-1; FIG. 7d shows the DSC curve of the <40 °C fraction of POE-2; FIG. 7e shows the DSC curve of the 40 °C-80 °C fraction of POE-2; and FIG. 7f shows the DSC curve of the >80 °C fraction of POE-2.

The >80 °C fractions of POE-1 and POE-2, respectively, were soaked in xylene at room temperature for 7 days, then soaked in xylene at 85 °C for 2 days. The soluble fraction was substantially removed after the two treatments with xylene, and treated fractions (high melting point fractions) were obtained. The high melting point fractions were dried in a vacuum oven at 80 degrees Celsius for 8 hours and the contents were 4% and 6%, respectively, by total mass of the initial sample. The DSC curves of the high melting point fractions are shown in Fig. 7g and 7h, respectively.

In the DSC graphs of Fig. 7a to 7h, the upper curve is a graph obtained by first scan, and the lower curve is a graph obtained by second scan which is continuously performed.

CEF-IR infrared analysis

The >80 °C fractions of POE-1 and POE-2 were characterized by CEF-IR. Wherein, copolymer POE-1 was the copolymer obtained in Example 17, and copolymer POE-2 was the copolymer obtained in Example 18. Wherein, the >80 °C fractions of POE-1 and POE-2, respectively, were soaked in xylene at room temperature for 7 days, then soaked in xylene at 85 °C for 2 days. The soluble fraction was substantially removed, and treated >80 °C fractions (high melting point fractions) were obtained. The high melting point fractions were dried in a vacuum oven at 80 degrees Celsius for 8 hours, and then the high melting point fractions were subjected to CEF-IR infrared analysis. The horizontal axis of Fig 8a is the elution temperature, and the vertical axis is the infrared absorption; the peak(s) of the curve represents melting point(s). The horizontal axis of Fig 8b is the elution temperature, and the vertical axis is the amount of $-CH_3$ contained in 1000 carbon atoms in the molecular chain, which can represent the content of the comonomer unit.

As can be seen from Figs 8a and 8b, the melting point and composition of the highest temperature peak obtained by CEF-IR analysis of the high melting point fraction of the copolymer of the present application are different from those of block copolymer Infuse 9000 (Dow Chemical) and LLDPE 2045G. The melting point of the highest temperature peak obtained by CEF-IR analysis of the high melting point fraction of the copolymer of the present application is higher than that of the block copolymer Infuse 9000, but is close to the melting point of LLDPE 2045G; the comonomer content of the copolymer at the highest temperature peak obtained by CEF-IR analysis of the high melting point fraction of the copolymer of the present application is lower than that of the block copolymer Infuse 9000 at the same elution temperature, but is higher than that of LLDPE 2045G. From the curves given in Figure 8b, it is determined that the comonomer content of the high melting point fraction of the copolymer of Example 17 obtained by CEF-IR analysis was 6.4-9.6wt%, the comonomer content of the high melting point fraction of the copolymer of Example 18 obtained by CEF-IR analysis is 8-18.4wt%, while the comonomer content of Infuse 9000 is 21-48wt%, and the comonomer content of LLDPE 2045G is 2-6.4wt%.

While embodiments of the present invention have been described above, the above description is illustrative, not exhaustive, and the present invention is not limited to the disclosed embodiments. Many modifications and variations are obvious to those of ordinary skill in the art without departing from the scope and spirit of the described embodiments.

The endpoints of ranges and any values disclosed herein are not limited to the precise ranges or values, rather these ranges or values are to be understood to include values close to said ranges or values. For numerical ranges, the endpoint values of various ranges, the endpoint values of various ranges and individual point values, and the individual point values can be combined with each other to obtain one or more new numerical ranges, and these new numerical ranges shall be deemed to be concretely disclosed herein.

The invention relates to an ethylene/$\alpha$-olefin copolymer and a preparation method thereof. The ethylene/$\alpha$-olefin copolymer has an $\alpha$-olefin content of greater than or equal to 30 wt%, a density of less than 0.875 g/cm$^3$, a melting point of greater than or equal to 90 °C, and the $\alpha$-olefin is a $C_3$-$C_{20}$ $\alpha$-olefin. The ethylene-$\alpha$-olefin copolymer of the present invention has a higher use temperature range at the same comonomer content as compared to conventional polyolefin elastomers, and is suitable for use in an environment with a higher temperature.

## Claims

1. An ethylene/α-olefin copolymer, **characterized in that** the ethylene/α-olefin copolymer has an α-olefin content of greater than or equal to 30 wt%, a density of less than 0.875 g/cm$^3$, a melting point of greater than or equal to 90 °C, and the α-olefin is a $C_3$-$C_{20}$ α-olefin, preferably the α-olefin is a $C_3$-$C_{10}$ α-olefin, more preferably one or more selected from the group consisting of propylene, 1-butene, 1-hexene, 1-octene, and 1-decene, still more preferably one or more selected from the group consisting of 1-hexene, 1-octene, and 1-decene.

2. The ethylene/α-olefin copolymer according to claim 1, wherein the ethylene/α-olefin copolymer has an α-olefin content of from 30 wt% to 55 wt%, a density of from 0.850 to 0.875 g/cm$^3$, a melting point of from 90 to 130 °C, a crystallinity of from 0.05% to 15%, preferably of from 0.1% to 10%, and a melt flow rate at 190 °C under 2.16 kg load of > 0.1 g/10min, preferably of from 0.2 g/10min to 400 g/10 min.

3. The ethylene/α-olefin copolymer according to claim 1 or 2, wherein the ethylene/α-olefin copolymer has the following characteristics:

   when tested by a differential scanning calorimeter, the ethylene/α-olefin copolymer has a melting endothermic peak between 90 °C and 130 °C; and/or
   when tested by a differential scanning calorimeter, the copolymer is heated to 180 °C at the speed of 10 °C/min, and the peak temperature of the generated melting peak is recorded as $T_m$; after being stabilized for 10 minutes, the copolymer is cooled to - 50 °C at the speed of 10 °C/min and then the copolymer is heated to $T_1$ at the speed of 10 °C/min; after being stabilized for 10 minutes, the copolymer is cooled to - 50 °C at the speed of 10 °C/min, a crystallization exothermic peak is generated and the peak temperature is recorded as $T_2$; $T_1$, $T_m$ and $T_2$ satisfy:

   i) when $T_m < T_1 \leq T_m$+20 °C, $T_2$ increases along with the decreasing of $T_1$;
   ii) when $T_1 > T_m$+20 °C, $T_2$ does not change with the decreasing of $T_1$.

4. The ethylene/α-olefin copolymer of any one of claims 1-3, wherein the ethylene/α-olefin copolymer has at least 2 peaks on the elution curve obtained by a Crystallization Elution Fractionation (CEF) test method.

5. The ethylene/α-olefin copolymer according to claim 4, wherein the ethylene/α-olefin copolymer has the following characteristics:
   a first temperature fraction, a second temperature fraction and a third temperature fraction are obtained by a Crystallization Elution Fractionation (CEF) test method, wherein the first temperature fraction being a < 40 °C fraction, the second temperature fraction being a 40-80 °C fraction, and the third temperature fraction being a > 80 °C fraction; wherein the content of the first temperature fraction is from 80 to 98 wt%, the content of the second temperature fraction is from 1 to 10 wt%, and the content of the third temperature fraction is from 1 to 10 wt%, based on the weight of the ethylene/α-olefin copolymer.

6. The ethylene/α-olefin copolymer of claim 5, wherein the first temperature fraction has at least two peaks on its DSC curve, the second temperature fraction has at least three peaks on its DSC curve, and the third temperature fraction has at least two peaks on its DSC curve.

7. The ethylene/α-olefin copolymer according to claim 6, wherein for the at least two peaks on the DSC curve of the first temperature fraction, the peak with the lowest melting point corresponds to a melting point lower than 45 °C and the peak with the highest melting point corresponds to a melting point higher than 80 °C;

   for the at least three peaks on the DSC curve of the second temperature fraction, the peak with the lowest melting point corresponds to a melting point lower than 40 °C, the at least one peak with intermediate melting point(s) corresponds to a melting point between 40 °C and 80 °C, and the peak with the highest melting point corresponds to a melting point higher than 80 °C;
   for the at least two peaks on the DSC curve of the third temperature fraction, the peak with the lowest melting point corresponds to a melting point lower than 40 °C and the peak with the highest melting point corresponds to a melting point higher than 80 °C.

8. The ethylene/α-olefin copolymer according to any one of claims 5 to 7, wherein the third temperature fraction is soaked in xylene at room temperature for 7 days and then soaked in xylene at 85 °C for 2 days so as to obtain a third temperature fraction with soluble fraction (substantially) removed, wherein the amount of the third temperature

fraction with soluble fraction (substantially) removed is 2 to 8% by weight, based on the total weight of the ethylene/α-olefin copolymer; and/or
the third temperature fraction with soluble fraction (substantially) removed has a comonomer content of 5 to 25 wt%, preferably 5.5 to 22 wt%, and more preferably 6 to 20 wt%, as determined by infrared detection in Crystallization Elution Fractionation (CEF) analysis.

**9.** The ethylene/α-olefin copolymer according to any one of claims 1 to 8, wherein the ethylene/α-olefin copolymer comprises a block copolymer of ethylene and α-olefin and a random copolymer of ethylene and α-olefin, and the random copolymer of ethylene and α-olefin is the main component; preferably, the content of the random copolymer of ethylene and α-olefin is from 89 to 98wt% and the content of the block copolymer of ethylene and α-olefin is from 2 to 11wt%, based on the weight of the ethylene/α-olefin copolymer.

**10.** The ethylene/α-olefin copolymer according to any one of claims 1-9, wherein the molar percentage content of OOO sequence structure in the ethylene/α-olefin copolymer is from 0.7% to 3.5%, preferably from 0.8% to 3.2%, preferably from 0.85% to 3.0%, and more preferably from 0.9% to 2.8%; wherein the total of EEE, EEO, OEO, EOE, OOE and OOO sequence structures in the ethylene/α-olefin copolymer is 100%, wherein E represents ethylene structural unit and O represents α-olefin structural unit.

**11.** A method for preparing an ethylene/α-olefin copolymer, the method comprising:
carrying out copolymerization reaction of ethylene and an α-olefin in solution in the presence of at least one catalyst in at least one reactor to obtain the ethylene/α-olefin copolymer;

wherein, during the whole reaction process, the molar concentration ratio of ethylene to the α-olefin in the solution in the reactor is maintained between 0.6 and 2.2;
the catalyst comprises:

A. a catalyst component;
B. an organoboron compound; and
C. an organoaluminum compound;

wherein the catalyst component is a premixture of a half-sandwich metallocene catalyst precursor and an alkyl aluminum compound;
wherein the half-sandwich metallocene catalyst precursor comprises a compound having the general formula $Cp'LMQ_2$, wherein,
Cp' is an optionally substituted cyclopentadiene group or a group derived therefrom, preferably one or more selected from the group consisting of substituted or unsubstituted cyclopentadienyl, substituted or unsubstituted indenyl and substituted or unsubstituted fluorenyl; when Cp' comprises a substituent, the substituent is one or more selected from the group consisting of $C_1$-$C_{12}$ alkyl, $C_1$-$C_{12}$ alkoxy, $C_1$-$C_{12}$ silyl, $C_6$-$C_{12}$ aryl, $C_7$-$C_{12}$ aralkyloxy, $C_2$-$C_{12}$ alkynyl and $C_8$-$C_{12}$ arylalkynyl, preferably one or more selected from the group consisting of $C_1$-$C_8$ alkyl, more preferably one or more selected from $C_1$-$C_6$ alkyl, and further preferably one or more selected from methyl, ethyl, n-propyl, isopropyl, n-butyl and isobutyl;
L is one or more of optionally substituted phenol ligands and phosphanimine ligands;
M is an element selected from group IVB, preferably Zr and/or Ti, more preferably Ti;
each Q is independently selected from halogen and/or $C_1$-$C_6$ alkyl, preferably halogen and/or $C_1$-$C_3$ alkyl, more preferably chlorine and/or methyl.

**12.** The method according to claim 11, wherein the molar concentration ratio of ethylene to α-olefin in the solution in the reactor is maintained between 0.65 and 1.6, preferably between 0.8 and 1.4; and/or

wherein the molar concentration of ethylene, in the solution in the reactor, is 0.05-10 mol/L, preferably 0.3-4 mol/L; and/or the molar concentration of α-olefin can be 0.031 to 15.4 mol/L, preferably 0.2 to 6.15 mol/L; and/or
wherein the conditions of copolymerization reaction include: polymerization pressure of 0.1 to 10 MPa, preferably 0.2 to 5 MPa; polymerization temperature of -30 °C to 160 °C, preferably 10 °C to 120 °C; and polymerization time of 1 to 300 minutes, preferably 10 to 60 minutes.

**13.** The method according to any one of claims 11-12, wherein ethylene is fed continuously, and α-olefin is fed intermittently, preferably the interval of intermittent feeding of α-olefin is 1-15 minutes; or,
both ethylene and α-olefin are fed continuously.

**14.** The method according to any one of claims 11-13, wherein the half-sandwich metallocene catalyst precursor is at least one of a compound of formula I and a compound of formula II,

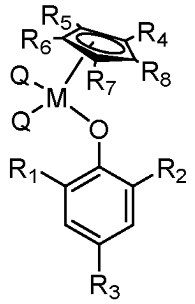

formula I

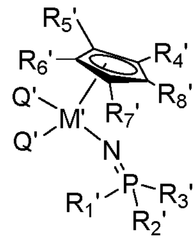

formula II

in the formula I, $R_1$, $R_2$ and $R_3$, which are the same or different, are each independently selected from the group consisting of hydrogen, substituted or unsubstituted $C_1$-$C_{20}$ straight or branched alkyl, substituted or unsubstituted $C_6$-$C_{20}$ aryl and substituted or unsubstituted $C_2$-$C_{20}$ alkynyl; $R_4$-$R_8$, which are the same or different, are each independently selected from the group consisting of hydrogen, substituted or unsubstituted $C_1$-$C_{20}$ straight or branched alkyl, and any two adjacent groups of $R_4$-$R_8$ are optionally linked to form a ring;

in formula I, M is an element selected from group IVB, preferably Zr and/or Ti, more preferably Ti; each Q is independently selected from halogen and/or $C_1$-$C_6$ alkyl, preferably halogen and/or $C_1$-$C_3$ alkyl, more preferably chlorine and/or methyl;

in the formula II, $R_1$', $R_2$' and $R_3$', which are the same or different, are each independently selected from the group consisting of substituted or unsubstituted straight or branched $C_1$-$C_{20}$ alkyl, substituted or unsubstituted $C_3$-$C_{20}$ cycloalkyl, and substituted or unsubstituted $C_6$-$C_{20}$ aryl; $R_4$'-$R_8$', which are the same or different, are each independently selected from the group consisting of hydrogen, substituted or unsubstituted, straight or branched $C_1$-$C_{20}$ alkyl, and any two adjacent groups of $R_4$'-$R_8$' are optionally linked to form a ring;

in formula II, M' is an element selected from group IVB, preferably Zr and/or Ti, more preferably Ti; each Q' is independently selected from halogen and/or $C_1$-$C_6$ alkyl, preferably halogen and/or $C_1$-$C_3$ alkyl, more preferably chlorine and/or methyl;

preferably, in formula I, $R_1$, $R_2$ and $R_3$, which are the same or different, are each independently selected from the group consisting of hydrogen, substituted or unsubstituted $C_1$-$C_6$ straight or branched alkyl, substituted or unsubstituted $C_6$-$C_8$ aryl and substituted or unsubstituted $C_2$-$C_8$ alkynyl; $R_4$-$R_8$, which are the same or different, are each independently selected from the group consisting of hydrogen, substituted or unsubstituted $C_1$-$C_6$ straight or branched alkyl, and any two adjacent groups of $R_4$-$R_8$ are optionally linked to form a ring;

more preferably, in the formula I,

$R_1$=$R_2$=iPr, $R_3$=H, $R_4$-$R_8$=Me, M=Ti, Q=Cl (1);

$R_1$=$R_2$=iPr, $R_3$=H, $R_4$-$R_8$=H, M=Ti, Q=Cl (2);

$R_1$=$R_2$=iPr, $R_3$=H, $R_5$=$R_6$=$R_7$=H, $R_4$ and $R_8$ form a ring and forms indenyl together with cyclopentadienyl, M=Ti, Q=Cl (3);

$R_1$=$R_2$=tBu, $R_3$=H, $R_4$-$R_8$=Me, M=Ti, Q=Cl (4);

$R_1$=$R_2$=H, $R_3$=H, $R_4$-$R_8$=Me, M=Ti, Q=Cl (5);

$R_1$=$R_2$=trimethylsilylethynyl, $R_3$=tBu, $R_4$-$R_8$=Me, M=Ti, Q=Cl (6);

$R_1$=$R_2$=t-butylethynyl, $R_3$=H, $R_4$-$R_8$=Me, M=Ti, Q=Cl (7);

$R_1$=$R_2$=9-anthracenylalkynyl, $R_3$=H, $R_4$-$R_8$=Me, M=Ti, Q=Cl (8);

preferably, in the formula II, $R_1$', $R_2$' and $R_3$', which are the same or different, are each independently selected from the group consisting of substituted or unsubstituted, straight or branched $C_1$-$C_6$ alkyl, substituted or unsubstituted $C_3$-$C_6$ cycloalkyl, and substituted or unsubstituted $C_6$-$C_8$ aryl; $R_4$'-$R_8$', which are the same or different, are each independently selected from the group consisting of hydrogen, substituted or unsubstituted, straight or branched $C_1$-$C_6$ alkyl, and any two adjacent groups of $R_4$'-$R_8$' are optionally linked to form a ring;

more preferably, in the formula II,

$R_1$'=$R_2$'=$R_3$'=tBu, $R_4$'-$R_8$'=H, M'=Ti, Q'=Cl (9);

$R_1$'=$R_2$'=$R_3$'=tBu, $R_4$'-$R_8$'=Me, M'=Ti, Q'=Cl (10);

$R_1$'=$R_2$'=$R_3$'=iPr, $R_4$'-$R_8$'=Me, M'=Ti, Q'=Cl (11).

**15.** The method according to any one of claims 11 to 14, wherein the alkyl aluminum compound has the general formula

$AlR'_3$, R's, which are the same or different, are selected from $C_1$-$C_8$ alkyl, wherein one or two alkyls are optionally replaced by chlorine; the alkyl aluminum compound preferably is one or more of trimethylaluminum, triethylaluminum, tri-n-butylaluminum, triisobutylaluminum, tri-n-hexylaluminum, alkylaluminum chloride, $Al(n\text{-}C_6H_{13})_3$ and $Al(n\text{-}C_8H_{17})_3$, further preferably is one or more of trimethylaluminum, triethylaluminum, triisobutylaluminum and tri-n-hexylaluminum, most preferably triisobutylaluminum; and/or

wherein the premixture further comprises a solvent, wherein the solvent is selected from one or more of $C_6$-$C_{20}$ aromatic hydrocarbon and $C_4$-$C_{20}$ alkane, preferably is one or more of benzene, toluene, xylene, ethylbenzene, hexane, heptane, isobutane and cyclohexane; preferably, the premixture is a homogeneous solution; and/or
wherein the catalyst component is obtained by contacting the half-sandwich metallocene catalyst precursor with the alkyl aluminum compound; preferably, the half-sandwich metallocene catalyst precursor and the alkyl aluminum compound are mixed in a solvent for 0.5-30 min, preferably 15-30 min to obtain the catalyst component, and, more preferably, after mixing, the mixed solution is left to stand for 0.5-48 h, further preferably 0.5-24 h to obtain the catalyst component; and/or
wherein the sum of the concentrations of the half-sandwich metallocene catalyst precursor and the alkyl aluminum compound in the premixture is 0.01-10 g/L, preferably 0.1-3 g/L, more preferably 0.1-2 g/L; and/or
wherein the molar ratio of the half-sandwich metallocene catalyst precursor to the alkyl aluminum compound is 1:(2-200), preferably 1:(2-100), more preferably 1:(20-100).

**16.** The method according to any one of claims 11 to 15 wherein the organoboron compound is selected from fluoroorganoboron compounds and/or fluoroorganoborate compounds; preferably, the fluoroorganoboron compound is selected from tris(pentafluorophenyl)boron and/or tris[3,5-bis(trifluoromethyl)phenyl]boron; preferably, the fluoroorganoborate compound is selected from fluorinated aryl borates, preferably selected from one or more of N,N-dimethylanilinium tetrakis(pentafluorophenyl)borate, triphenyl tetrakis(pentafluorophenyl)borate, trityl tetrakis(pentafluorophenyl)borate, lithium tetrakis(pentafluorophenyl)borate, N,N-dimethylanilinium tetrakis[3,5-bis(trifluoromethyl)phenyl]borate, and triphenylcarbenium tetrakis[3,5-bis(trifluoromethyl)phenyl]borate; and/or

wherein the organoaluminum compound is selected from alkylaluminum compounds and/or organoaluminoxane compounds;
preferably, the alkylaluminum compound has the general formula $AlR'_3$, R's, which are the same or different, are selected from $C_1$-$C_8$ alkyl, wherein one or two alkyls are optionally replaced by chlorine; the alkylaluminum compound preferably is one or more of trimethylaluminum, triethylaluminum, tri-n-butylaluminum, triisobutylaluminum, tri-n-hexylaluminum, alkylaluminum chloride, $Al(n\text{-}C_6H_{13})_3$ and $Al(n\text{-}C_8H_{17})_3$, further preferably is one or more of trimethylaluminum, triethylaluminum, triisobutylaluminum and tri-n-hexylaluminum, most preferably triisobutylaluminum;
preferably, the organoaluminoxane compound has the following general structure:

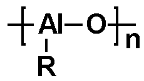

wherein R is selected from $C_1$-$C_{12}$ hydrocarbyl, preferably $C_1$-$C_6$ alkyl, more preferably methyl and/or isobutyl; and/or
wherein the molar ratio of the catalyst component calculated by the half-sandwich metallocene catalyst precursor, the organoboron compound and the organoaluminum compound is 1:(1-20):(50-3000), preferably 1:(2-10):(100-500).

**17.** The method according to any one of claims 11-16, wherein the copolymerization reaction is carried out in an inert solvent, wherein the inert solvent is one or more selected from $C_6$-$C_{20}$ aromatic hydrocarbon and $C_4$-$C_{20}$ alkane, preferably one or more selected from benzene, toluene, hexane and heptane.

**18.** The method according to any one of claims 11 to 17, wherein the method is used for preparing the ethylene/$\alpha$-olefin copolymer according to any one of claims 1 to 10.

**19.** An ethylene/$\alpha$-olefin copolymer prepared by the method according to any one of claims 11-18.

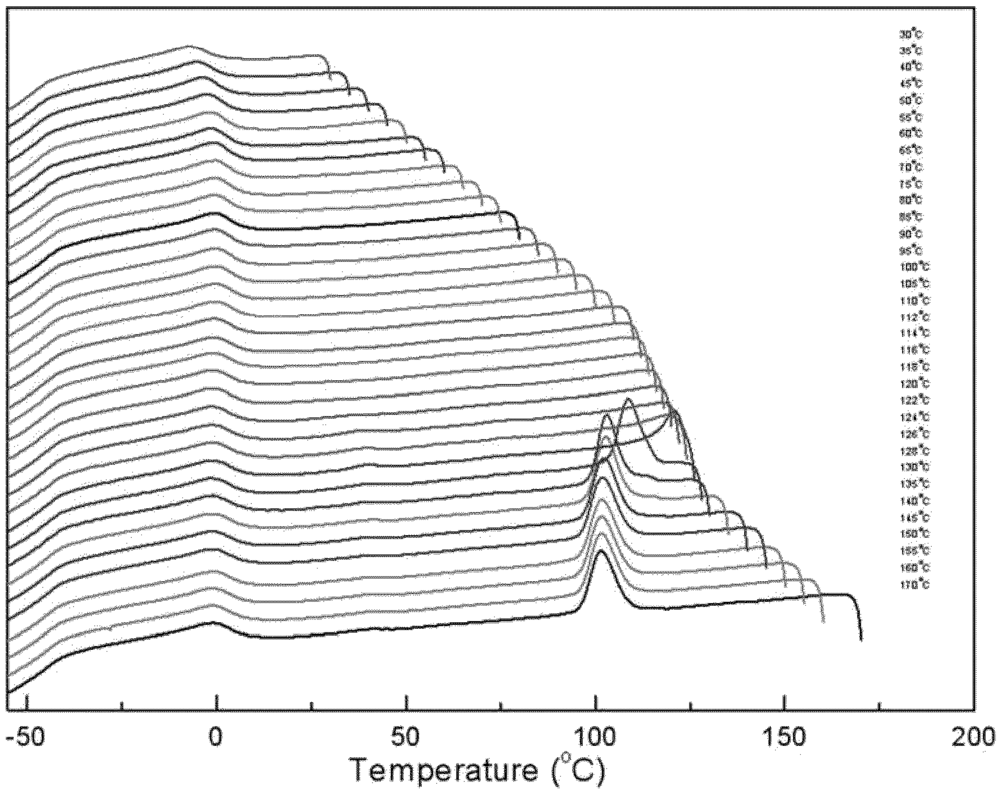
30°C
35°C
40°C
45°C
50°C
55°C
60°C
65°C
70°C
75°C
80°C
85°C
90°C
95°C
100°C
105°C
110°C
112°C
114°C
116°C
118°C
120°C
122°C
124°C
126°C
128°C
130°C
135°C
140°C
145°C
150°C
155°C
160°C
170°C
-50
0
50
100
150
200
Temperature (°C)

Fig.1

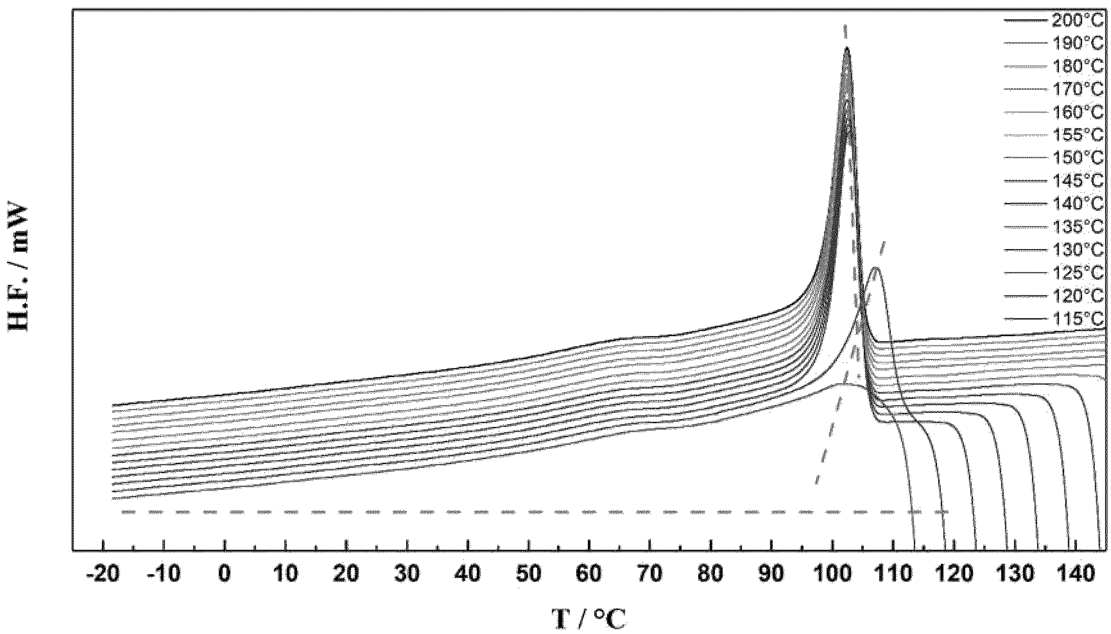
200°C
190°C
180°C
170°C
160°C
155°C
150°C
145°C
140°C
135°C
130°C
125°C
120°C
115°C
H.F. / mW
-20
-10
0
10
20
30
40
50
60
70
80
90
100
110
120
130
140
T / °C

Fig.2

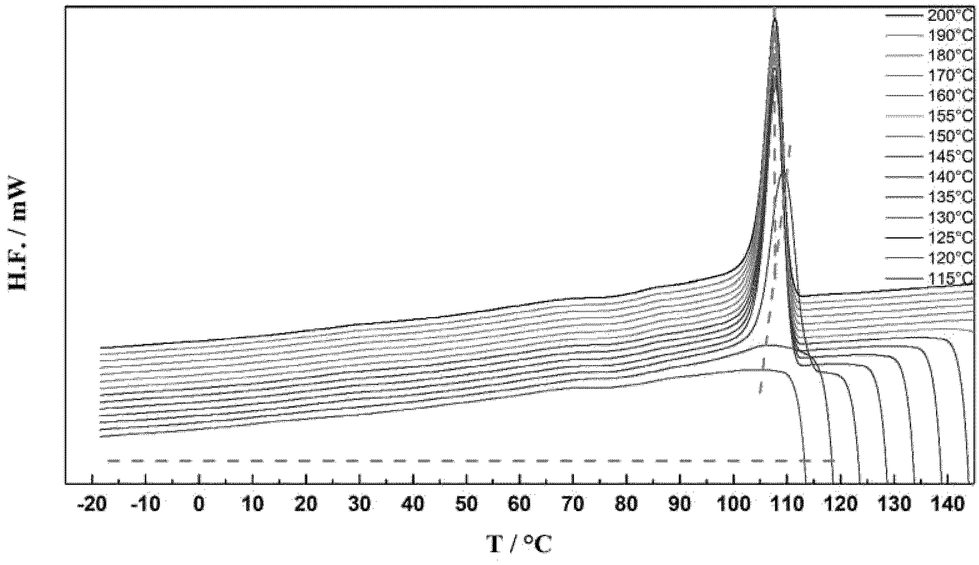


Fig.3

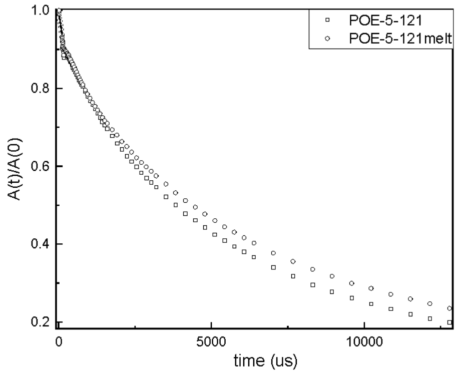


Fig. 4a

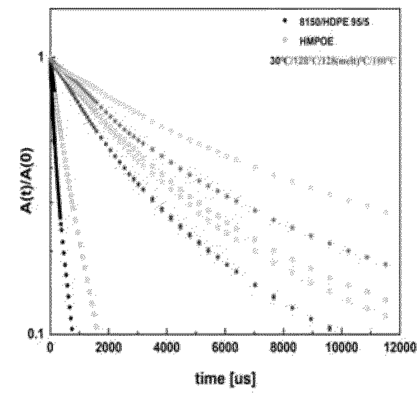


Fig. 4b

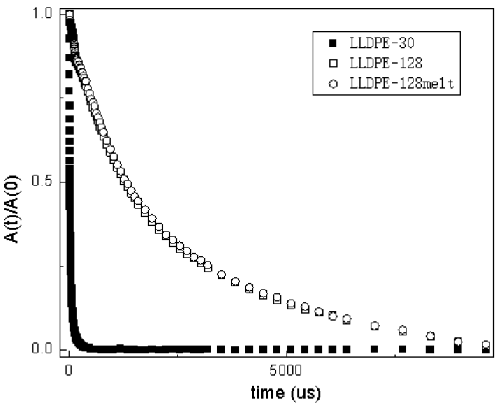


Fig.5a

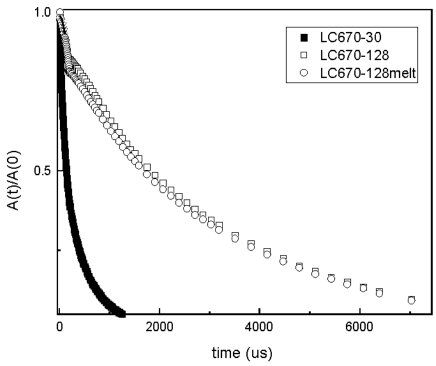


Fig.5b

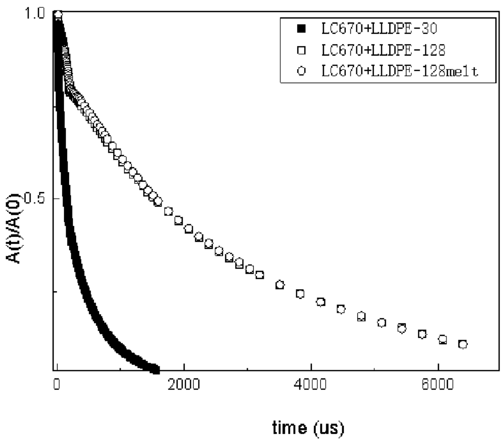


Fig.5c

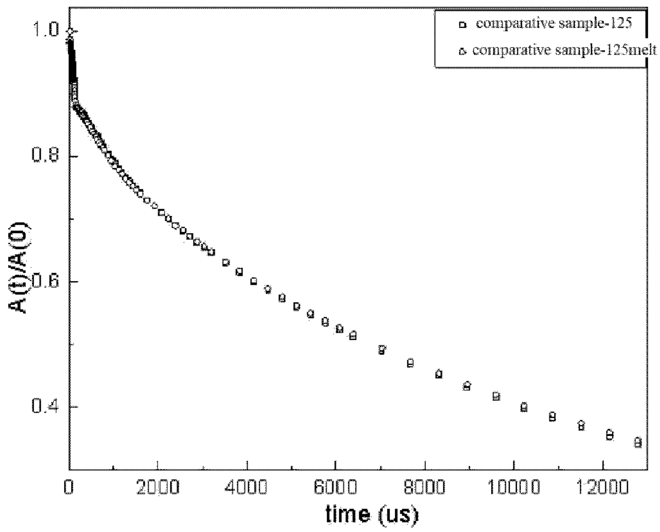
comparative sample-125
comparative sample-125melt
A(t)/A(0)
1.0
0.8
0.6
0.4
0
2000
4000
6000
8000
10000
12000
time (us)

Fig.6a

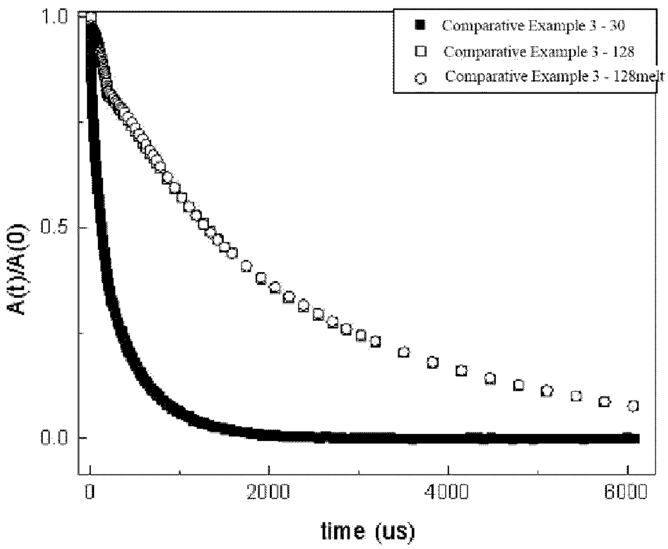
Comparative Example 3 - 30
Comparative Example 3 - 128
Comparative Example 3 - 128melt
A(t)/A(0)
1.0
0.5
0.0
0
2000
4000
6000
time (us)

Fig.6b

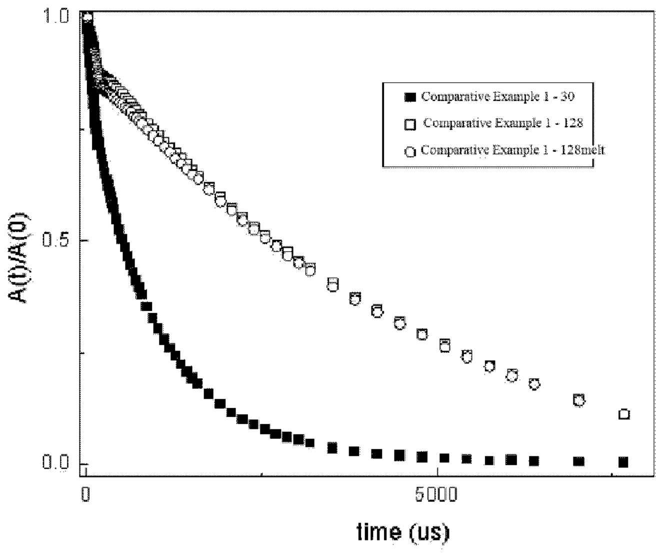
1.0
0.5
0.0
A(t)/A(0)
0
5000
time (us)
Comparative Example 1 - 30
Comparative Example 1 - 128
Comparative Example 1 - 128melt

Fig.6c

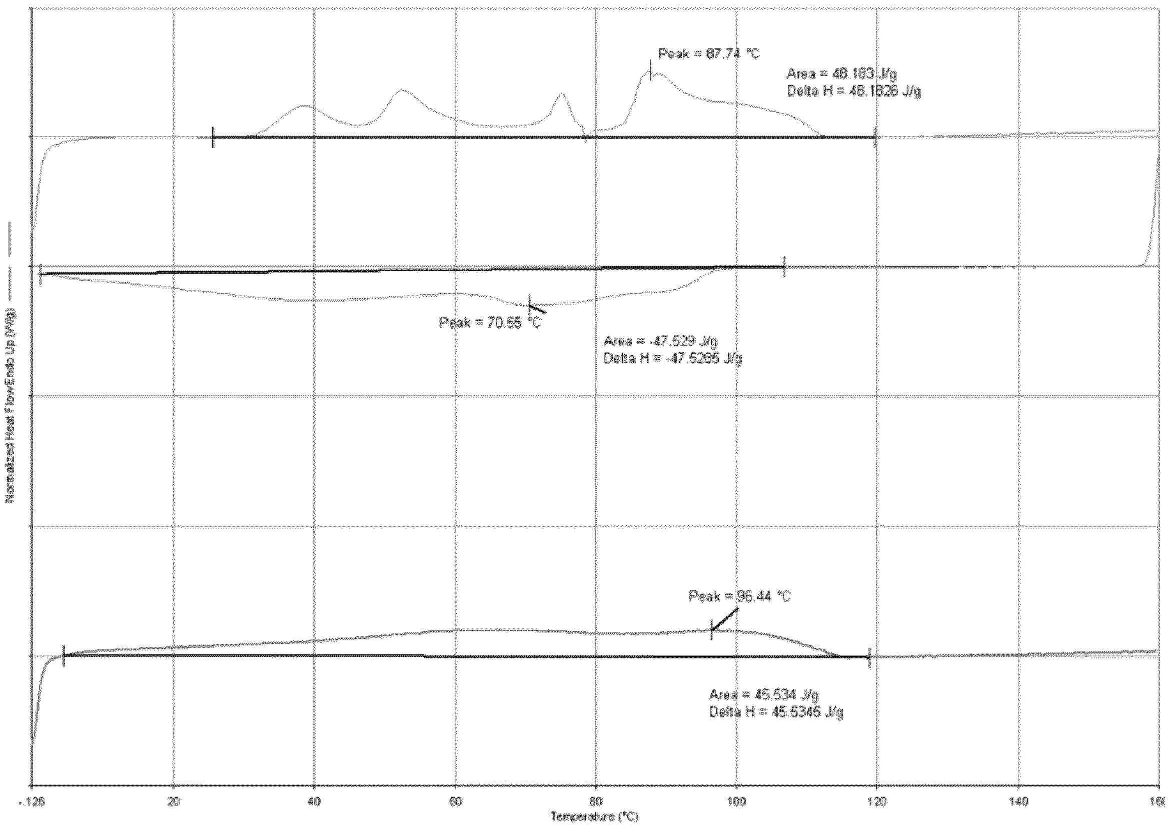
Peak = 87.74 °C
Area = 48.183 J/g
Delta H = 48.1826 J/g
Peak = 70.55 °C
Area = -47.529 J/g
Delta H = -47.5285 J/g
Peak = 96.44 °C
Area = 45.534 J/g
Delta H = 45.5345 J/g
Normalized Heat Flow Endo Up (W/g)
20
40
60
80
100
120
140
Temperature (°C)

Fig.7a

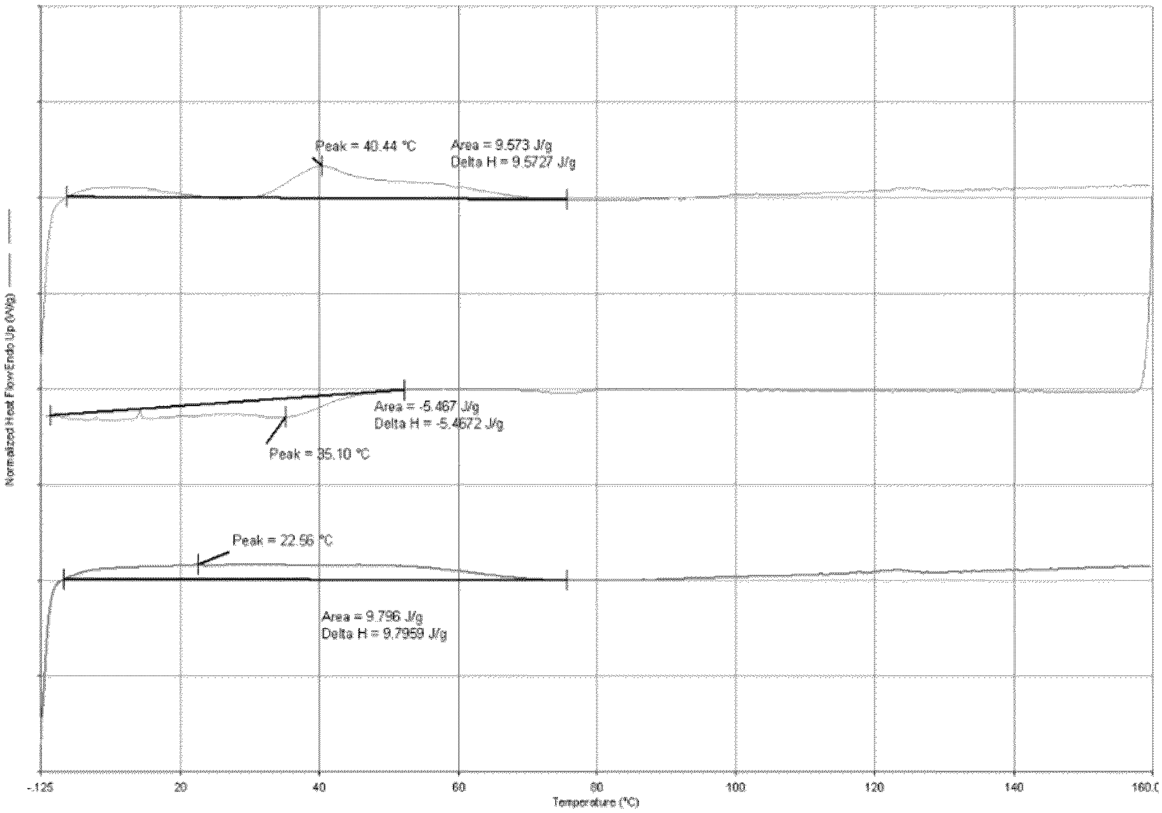
Peak = 40.44 °C
Area = 9.573 J/g
Delta H = 9.5727 J/g
Area = -5.467 J/g
Delta H = -5.4672 J/g
Peak = 35.10 °C
Peak = 22.56 °C
Area = 9.796 J/g
Delta H = 9.7959 J/g
Normalized Heat Flow Endo Up (W/g)
-.125
20
40
60
80
100
120
140
160.0
Temperature (°C)

Fig.7b

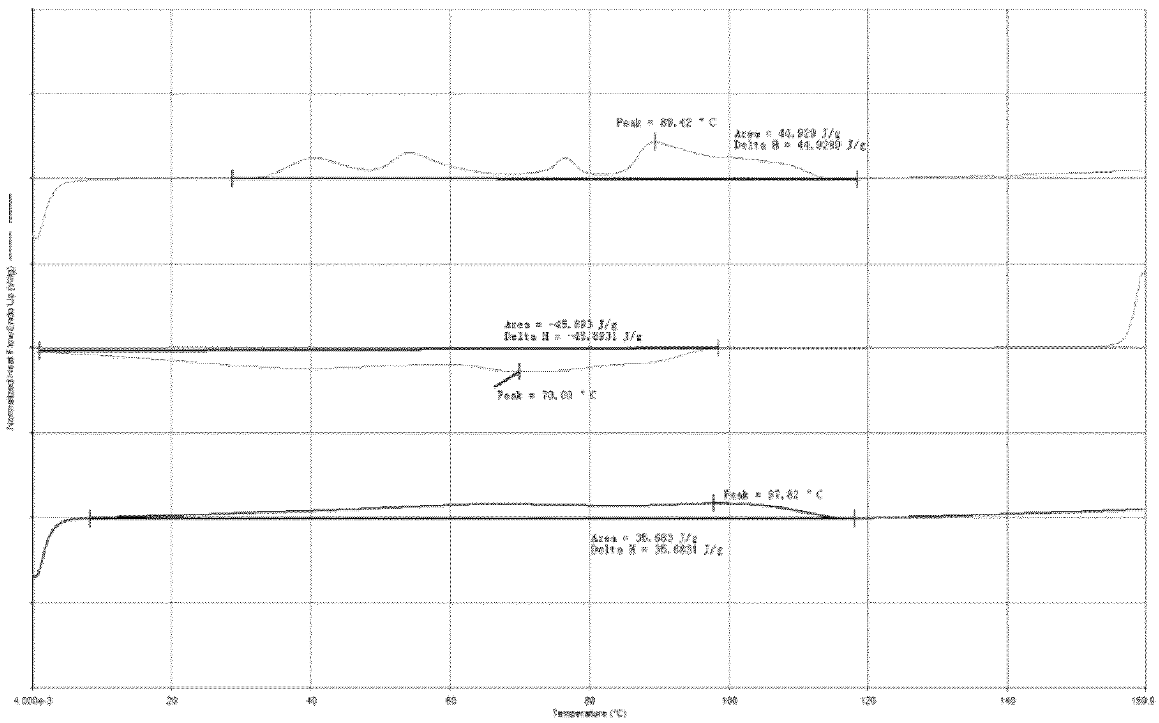
Peak = 89.42 °C
Area = 44.929 J/g
Delta H = 44.9289 J/g
Area = -45.893 J/g
Delta H = -45.8931 J/g
Peak = 70.00 °C
Peak = 97.82 °C
Area = 35.683 J/g
Delta H = 35.6831 J/g
Normalized Heat Flow Endo Up (W/g)
4.000e-3
20
40
60
80
100
120
140
159.9
Temperature (°C)

Fig.7c

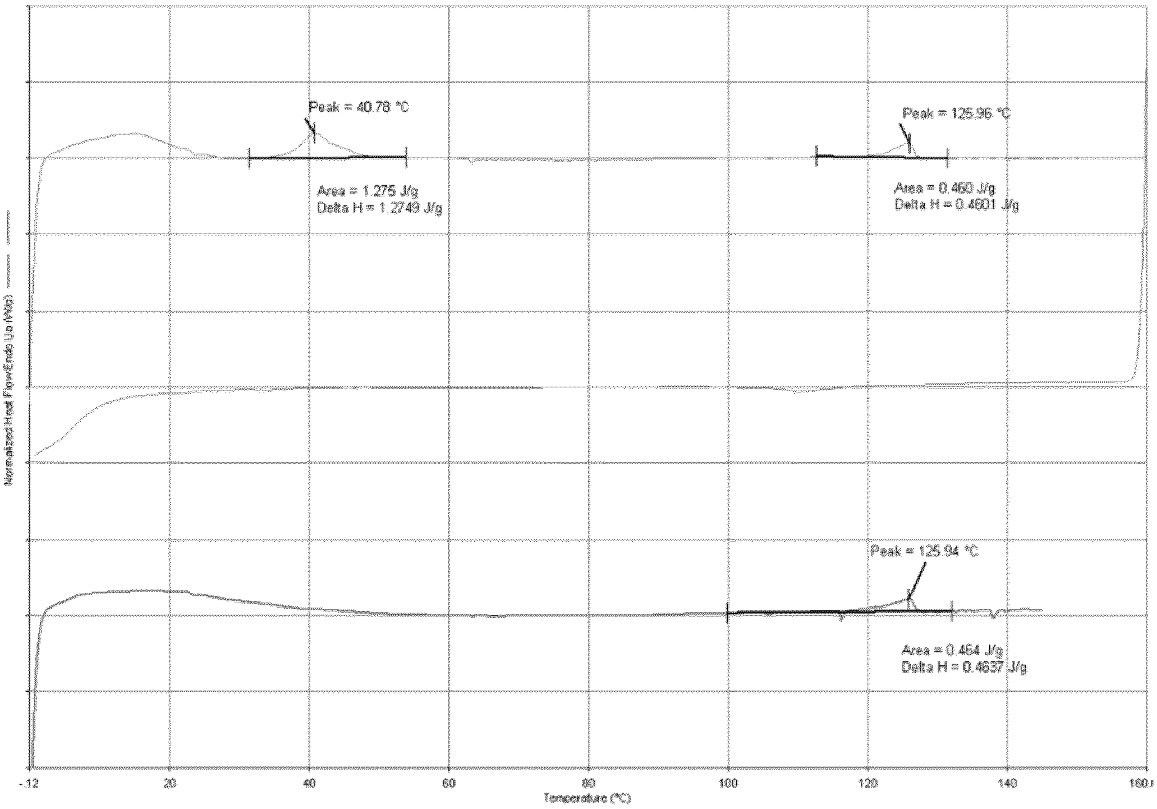
Peak = 40.78 °C
Area = 1.275 J/g
Delta H = 1.2749 J/g
Peak = 125.96 °C
Area = 0.460 J/g
Delta H = 0.4601 J/g
Peak = 125.94 °C
Area = 0.464 J/g
Delta H = 0.4637 J/g
Normalized Heat Flow Endo Up (W/g)
Temperature (°C)

Fig.7d

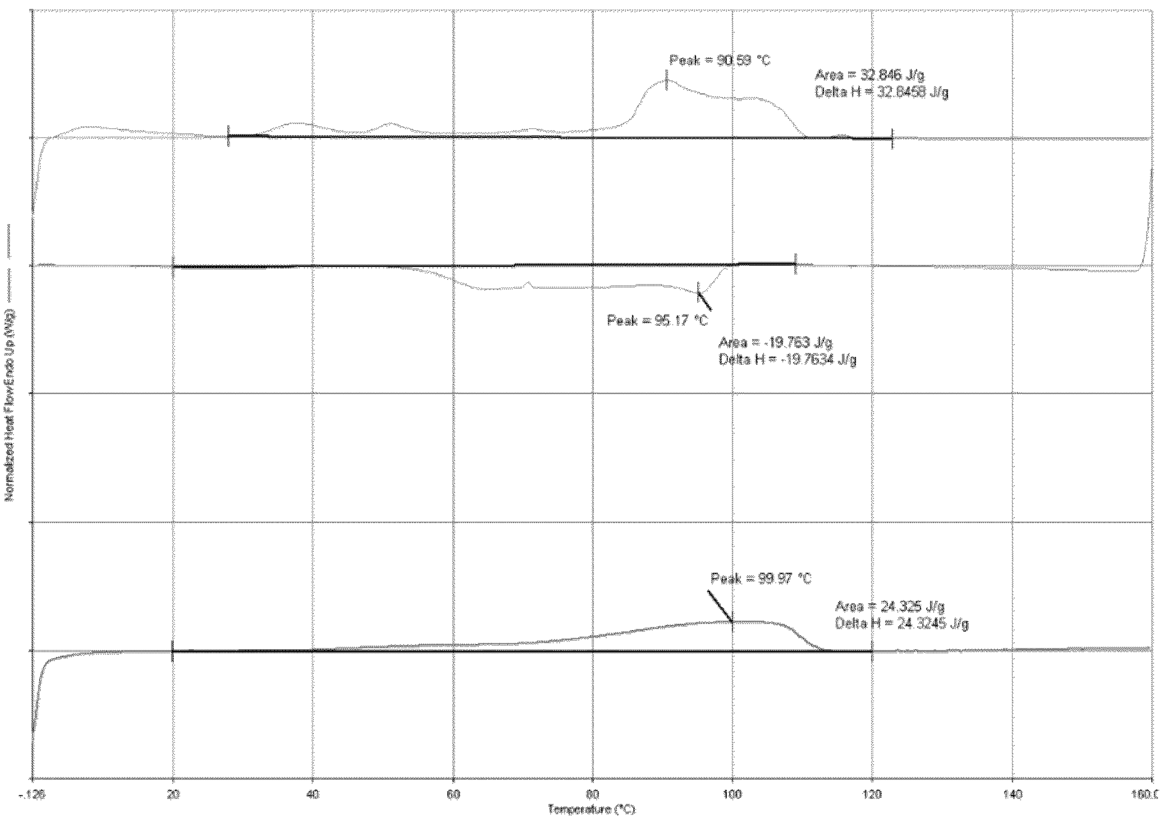
Peak = 90.59 °C
Area = 32.846 J/g
Delta H = 32.8458 J/g
Peak = 95.17 °C
Area = -19.763 J/g
Delta H = -19.7634 J/g
Peak = 99.97 °C
Area = 24.325 J/g
Delta H = 24.3245 J/g
Normalized Heat Flow Endo Up (W/g)
Temperature (°C)

Fig.7e

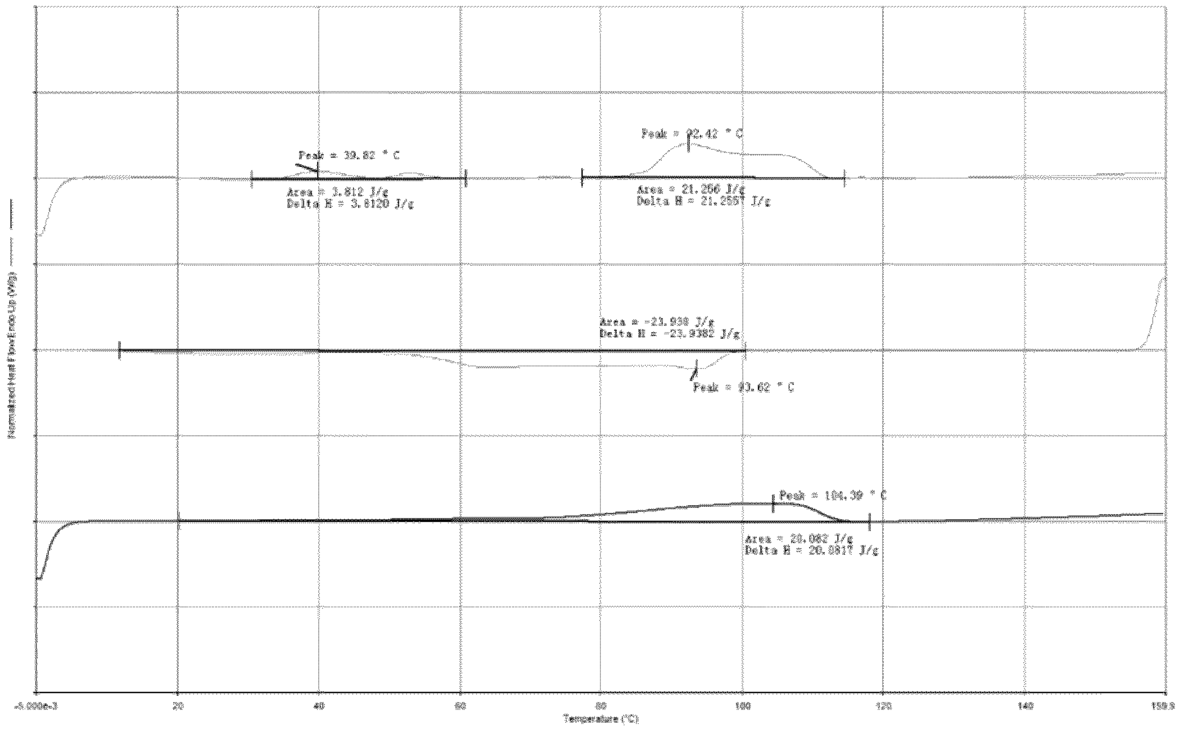
Peak = 39.82 °C
Area = 3.812 J/g
Delta H = 3.8120 J/g
Peak = 92.42 °C
Area = 21.256 J/g
Delta H = 21.2557 J/g
Area = -23.938 J/g
Delta H = -23.9382 J/g
Peak = 93.62 °C
Peak = 104.39 °C
Area = 20.082 J/g
Delta H = 20.0817 J/g
Normalized Heat Flow Endo Up (W/g)
-5.000e-3
20
40
60
80
100
120
140
159.9
Temperature (°C)

Fig.7f

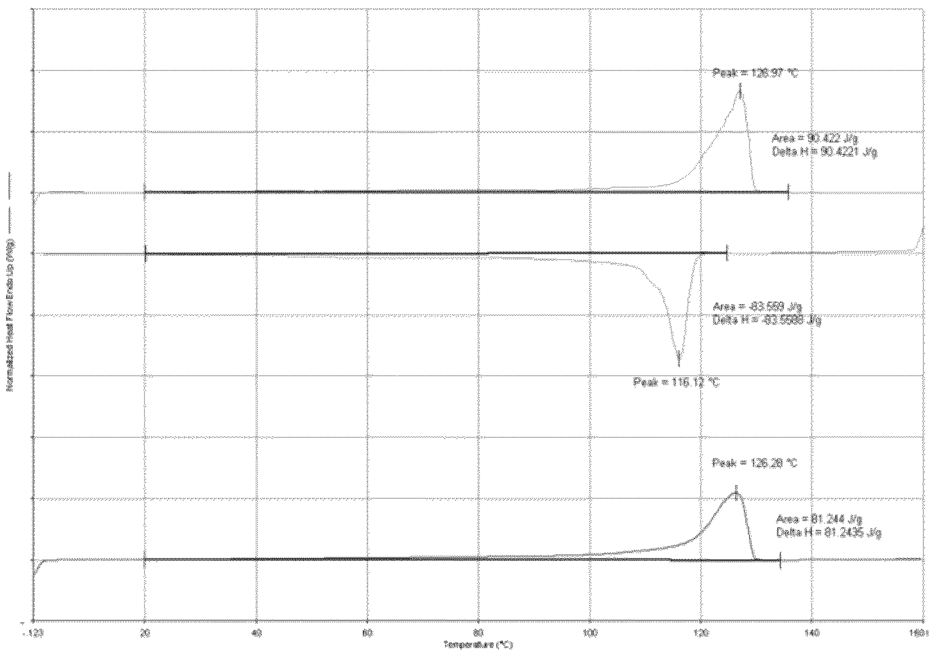
Peak = 126.97 °C
Area = 90.422 J/g
Delta H = 90.4221 J/g
Area = -83.559 J/g
Delta H = -83.5588 J/g
Peak = 116.12 °C
Peak = 126.28 °C
Area = 81.244 J/g
Delta H = 81.2435 J/g
Normalized Heat Flow Endo Up (W/g)
20
40
60
80
100
120
140
Temperature (°C)

Fig.7g

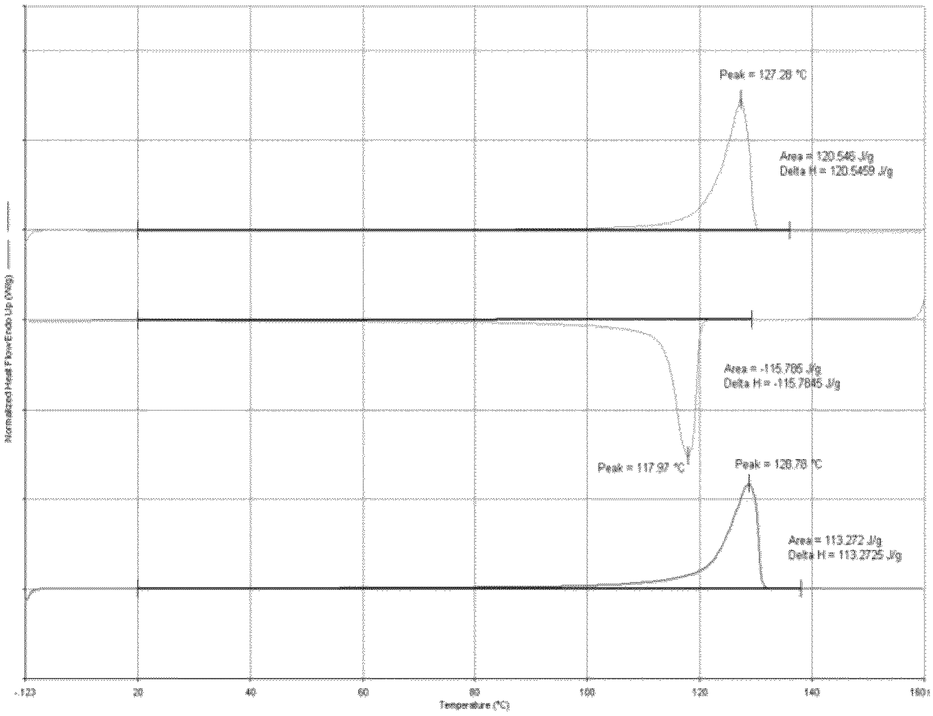
Peak = 127.28 °C
Area = 120.546 J/g
Delta H = 120.5459 J/g
Area = -115.785 J/g
Delta H = -115.7845 J/g
Peak = 117.97 °C
Peak = 128.78 °C
Area = 113.272 J/g
Delta H = 113.2725 J/g
Normalized Heat Flow Endo Up (W/g)
-123
20
40
60
80
100
120
140
160
Temperature (°C)

Fig.7h

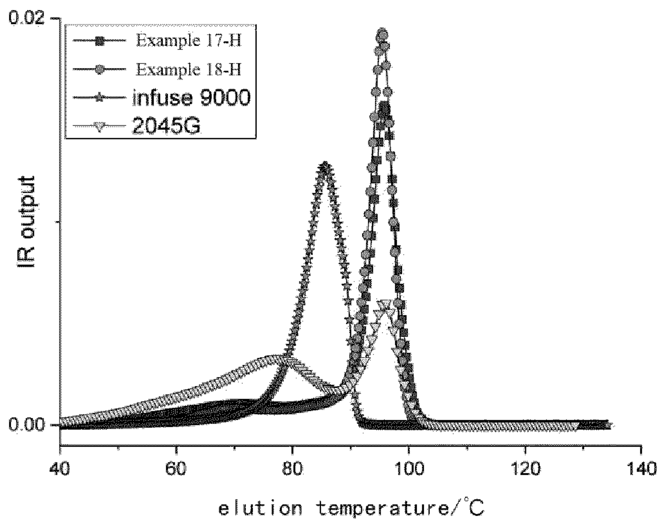
0.02
0.00
Example 17-H
Example 18-H
infuse 9000
2045G
IR output
40
60
80
100
120
140
elution temperature/°C

Fig.8a

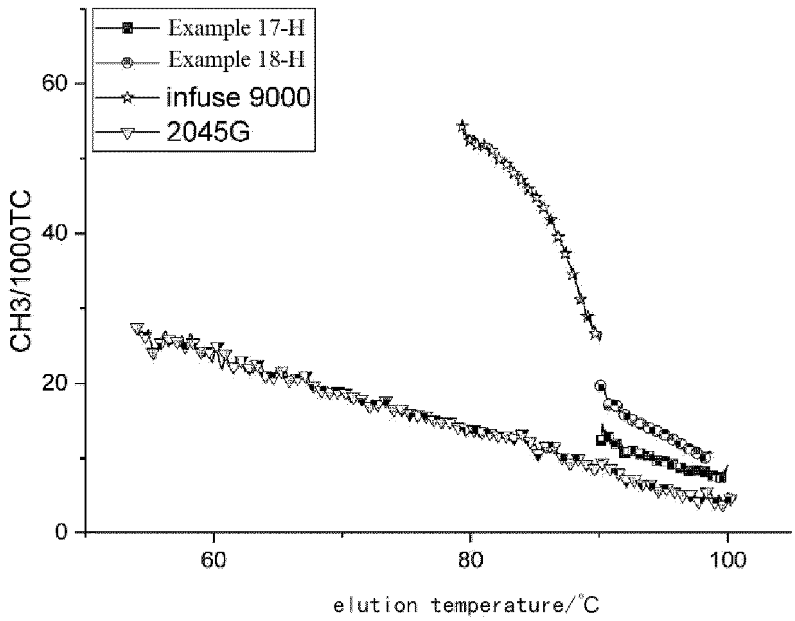
Example 17-H
Example 18-H
infuse 9000
2045G
CH3/1000TC
elution temperature/°C
0
20
40
60
80
100

Fig.8b

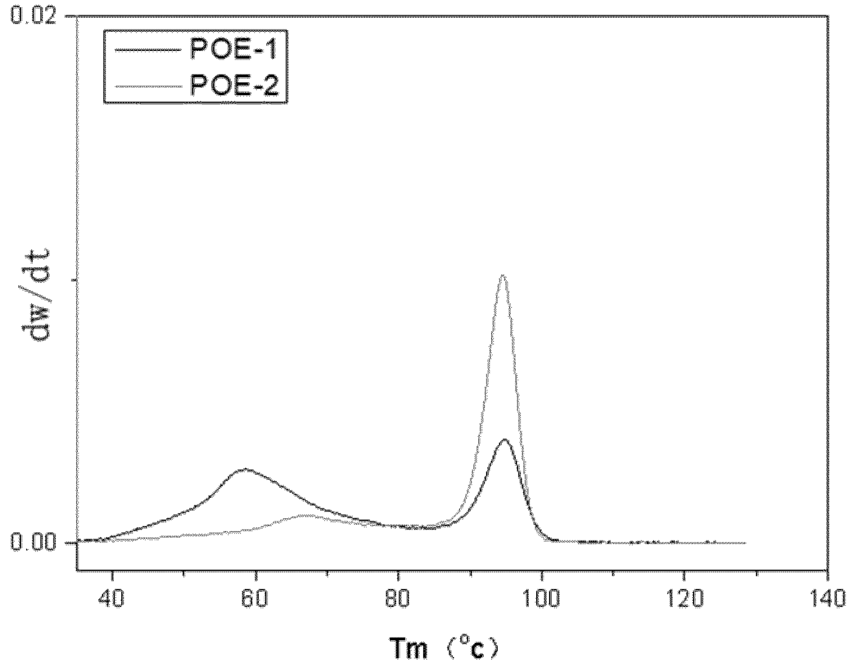
POE-1
POE-2
dw/dt
0.02
0.00
40
60
80
100
120
140
Tm (°c)

Fig.9

## INTERNATIONAL SEARCH REPORT

International application No.
**PCT/CN2023/126788**

**A. CLASSIFICATION OF SUBJECT MATTER**

C08F210/16(2006.01)i; C08F4/6592(2006.01)i; C08F4/64(2006.01)i; C08F4/642(2006.01)i; C08F297/08(2006.01)i

According to International Patent Classification (IPC) or to both national classification and IPC

**B. FIELDS SEARCHED**

Minimum documentation searched (classification system followed by classification symbols)

IPC:C08F

Documentation searched other than minimum documentation to the extent that such documents are included in the fields searched

Electronic data base consulted during the international search (name of data base and, where practicable, search terms used)

CNKI, VCN, CNTXT, ENTXT, DWPI, ISI web of Knowledge: 乙烯, α-烯烃, 丙烯, 丁烯, 癸烯, 熔点, 熔融温度, Tm, mp, 密度, 有机铝, 有机硼, 硼, 茂金属, ethylene, α-olefin, propylene, butene, butylene, decene, melting point, melting temperature, density, organoaluminum, organoboron, boron, metallocene

**C. DOCUMENTS CONSIDERED TO BE RELEVANT**

| Category* | Citation of document, with indication, where appropriate, of the relevant passages | Relevant to claim No. |
|---|---|---|
| X | CN 103502289 A (LG CHEM LTD.) 08 January 2014 (2014-01-08)<br>embodiments 1-3 | 1-10, 19 |
| X | CN 109415459 A (LG CHEM LTD.) 01 March 2019 (2019-03-01)<br>claims 1, 6, and 8-10, and embodiments 1-3 | 1-10, 19 |
| A | CN 112745405 A (CHINA PETROLEUM AND CHEMICAL CORP.; BEIJING RESEARCH INSTITUTE OF CHEMICAL INDUSTRY, CHINA PETROLEUM AND CHEMICAL CORP.) 04 May 2021 (2021-05-04)<br>entire document | 1-19 |
| A | CN 102083871 A (SK ENERGY CO., LTD.) 01 June 2011 (2011-06-01)<br>entire document | 1-19 |
| A | CN 102464751 A (CHINA PETROLEUM AND CHEMICAL CORP.; BEIJING RESEARCH INSTITUTE OF CHEMICAL INDUSTRY, CHINA PETROLEUM AND CHEMICAL CORP.) 23 May 2012 (2012-05-23)<br>entire document | 1-19 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 January 2024** | **10 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/126788**

| Patent document cited in search report | | | Publication date (day/month/year) | Patent family member(s) | | | Publication date (day/month/year) |
|---|---|---|---|---|---|---|---|
| CN | 103502289 | A | 08 January 2014 | US | 2016168304 | A1 | 16 June 2016 |
| | | | | US | 9527946 | B2 | 27 December 2016 |
| | | | | WO | 2012099414 | A2 | 26 July 2012 |
| | | | | WO | 2012099414 | A3 | 29 November 2012 |
| | | | | EP | 2666797 | A2 | 27 November 2013 |
| | | | | EP | 2666797 | A4 | 02 September 2015 |
| | | | | EP | 2666797 | B1 | 27 December 2017 |
| | | | | KR | 20120085201 | A | 31 July 2012 |
| | | | | KR | 101262308 | B1 | 08 May 2013 |
| | | | | US | 2014011974 | A1 | 09 January 2014 |
| | | | | US | 9079992 | B2 | 14 July 2015 |
| | | | | CN | 203502289 | B | 17 August 2016 |
| CN | 109415459 | A | 01 March 2019 | EP | 3456748 | A2 | 20 March 2019 |
| | | | | EP | 3456748 | A4 | 02 October 2019 |
| | | | | KR | 20180033008 | A | 02 April 2018 |
| | | | | KR | 102083001 | B1 | 28 February 2020 |
| | | | | WO | 2018056655 | A2 | 29 March 2018 |
| | | | | WO | 2018056655 | A3 | 17 May 2018 |
| | | | | US | 2019135963 | A1 | 09 May 2019 |
| | | | | US | 10961335 | B2 | 30 March 2021 |
| | | | | CN | 109415459 | B | 21 January 2022 |
| CN | 112745405 | A | 04 May 2021 | CN | 112745405 | B | 14 March 2023 |
| CN | 102083871 | A | 01 June 2011 | TW | 201026722 | A | 16 July 2010 |
| | | | | TWI | 476214 | B | 11 March 2015 |
| | | | | US | 2010113720 | A1 | 06 May 2010 |
| | | | | US | 8013086 | B2 | 06 September 2011 |
| | | | | EP | 2344552 | A2 | 20 July 2011 |
| | | | | EP | 2344552 | A4 | 06 November 2013 |
| | | | | EP | 2344552 | B1 | 01 August 2018 |
| | | | | ES | 2684566 | T3 | 03 October 2018 |
| | | | | US | 2011282011 | A1 | 17 November 2011 |
| | | | | WO | 2010053264 | A2 | 14 May 2010 |
| | | | | WO | 2010053264 | A3 | 29 July 2010 |
| | | | | RU | 2010154457 | A | 10 July 2012 |
| | | | | RU | 2512536 | C2 | 10 April 2014 |
| | | | | KR | 20120007087 | A | 19 January 2012 |
| | | | | KR | 101470564 | B1 | 10 December 2014 |
| | | | | CA | 2728110 | A1 | 14 May 2010 |
| | | | | CA | 2728110 | C | 15 October 2013 |
| | | | | KR | 20100050385 | A | 13 May 2010 |
| | | | | KR | 101167082 | B1 | 20 July 2012 |
| | | | | JP | 2012507589 | A | 29 March 2012 |
| | | | | CN | 107365398 | A | 21 November 2017 |
| CN | 102464751 | A | 23 May 2012 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102464751 B
- CN 108752526 A
- CN 112745365 A
- CN 112745405 A
- CN 112745444 A
- CN 110272515 B